# EUROPÄISCHE PATENTSCHRIFT

(11) **EP 0 422 516 B1**
(45) Veröffentlichungstag und Bekanntmachung des Hinweises auf die Patenterteilung: **07.12.1994**
(21) Anmeldenummer: 90119129.6
(22) Anmeldetag: 05.10.1990
(51) Int. Cl.: C03C 27/04, E06B 3/56, B60J 1/02

(54) **Glaskörper, der zur Verklebung mit einem weiteren Material ausgestattet ist, Verfahren zu dessen Herstellung und dessen Verwendung**
Glass body, suitable for sealing to another material, method for its manufacture and its use
Objet en verre, adapté pour scellement à un autre matériau, procédé pour sa production et son usage

(30) Priorität: 12.10.1989 CH 3723/89
(43) Veröffentlichungstag der Anmeldung: 17.04.1991
(73) Patentinhaber: Sika AG, vorm. Kaspar Winkler & Co., CH-8048 Zürich (CH)
(72) Erfinder: Rothe, Holger, CH-8102 Oberengstringen (CH); Zabel, Lutz, CH-8903 Birmensdorf (CH)
(74) Vertreter: Blum, Rudolf Emil Ernst

(56) Entgegenhaltungen:
- EP-A- 0 307 316
- DE-A- 3 409 960
- FR-A- 2 266 669

## Beschreibung

In vielen Anwendungsbereichen ist eine dauerhafte Verklebung eines Glaskörpers, insbesondere einer Glasscheibbe, mit einem weiteren Material nötig, und diese dauerhafte Verklebung muss in vielen Anwendungsbereichen starken mechanischen Beanspruchungen und auch starken Beanspruchungen durch Witterungseinflüsse, wie zum Beispiel Einwirkung von Wasser, unterschiedlichsten Umgebungstemperaturen, Sonnenlicht, etc. während langer Zeiträume standhalten.

Entsprechende dauerhafte klebende Verbindungen zwischen einem Glaskörper und einem weiteren Material, werden beispielsweise bei der Fassadenverglasung, der Verankerung von Glasscheiben, beziehungsweise Verbundglasscheiben, in den Fensterrahmen, und vielen anderen Bereichen gefordert. Besonders hohe Anforderungen werden in der Fahrzeugindustrie bezüglich einer dauerhaften Verklebung von Glasscheiben mit den entsprechenden Karosserieteilen des Fahrzeuges gestellt, wie zum Beispiel bei der Einklebung von Windschutzscheiben, Heckscheiben und nicht öffenbaren Seitenscheiben des Fahrzeuges. Besonders drastisch sind die gestellten Forderungen im Falle einer Windschutzscheibe, weil die entsprechende Klebestelle im Falle eines Aufpralls sehr hohen mechanischen Beanspruchungen standhalten muss.

### BESCHREIBUNG DES STANDES DER TECHNIK

In vielen Anwendungsbereichen ist es vorteilhaft, die Verbindung zwischen einem Glaskörper und einem weiteren Material durch eine Verklebung herzustellen, weil eine geklebte Verbindung im Vergleich zu einer nicht verklebten Verbindungsstelle wesentliche Vorteile bezüglich einer verbesserten Wasserdichtigkeit aufweist. Im Fahrzeugbau tragen verklebte Scheiben erheblich zur Torsionssteifigkeit bei, denn eine Fahrgastzelle mit verklebten Scheiben verwindet sich bei einer mechanischen Belastung deutlich weniger als eine Fahrgastzelle mit nicht verklebten Scheiben. Ausserdem führt die Verklebung der Scheiben im Vergleich zu nicht verklebten Scheiben, zu einer Schalldämpfung, beziehungsweise Geräuschreduktion, und zu einer Gewichtsverminderung.

Bei der Verklebung einer Fahrzeugscheibe wird der entsprechende Klebstoff entweder auf die Glasscheibe oder auf den Fahrzeugflansch aufgetragen und die Scheibe unter Druckeinwirkung in die richtige Position gebracht. Dabei ist es bei der exakten Positionierung der Scheibe nötig, Abstandshalter zu verwenden, die verhindern, dass die verklebende Schicht ungleichmässig dick ist. Ein derartiges Verfahren zum Verkleben von Glas mit Metall wird beispielsweise in der veröffentlichten französischen Patentanmeldung FR-A2 266 669 beschrieben. Die beiden zu verbindenden Körper weisen dabei bevorzugt eine zylindrische Form auf und werden so aneinandergefügt, dass zwischen den Flächenteilen ein Zwischenraum entsteht, der durch zwei torusförmige elastische Dichtungsringe abgeschlossen wird. Die Fixierung der Ringe erfolgt mittels zweier Rillen, die in die Oberfläche des Metallkörpers eingelassen sind. Zwei gegenüberliegende Oeffnungen im Metallkörper ermöglichen den abgegrenzten Zwischenraum mit flüssigem Klebstoff vollständig zu füllen.

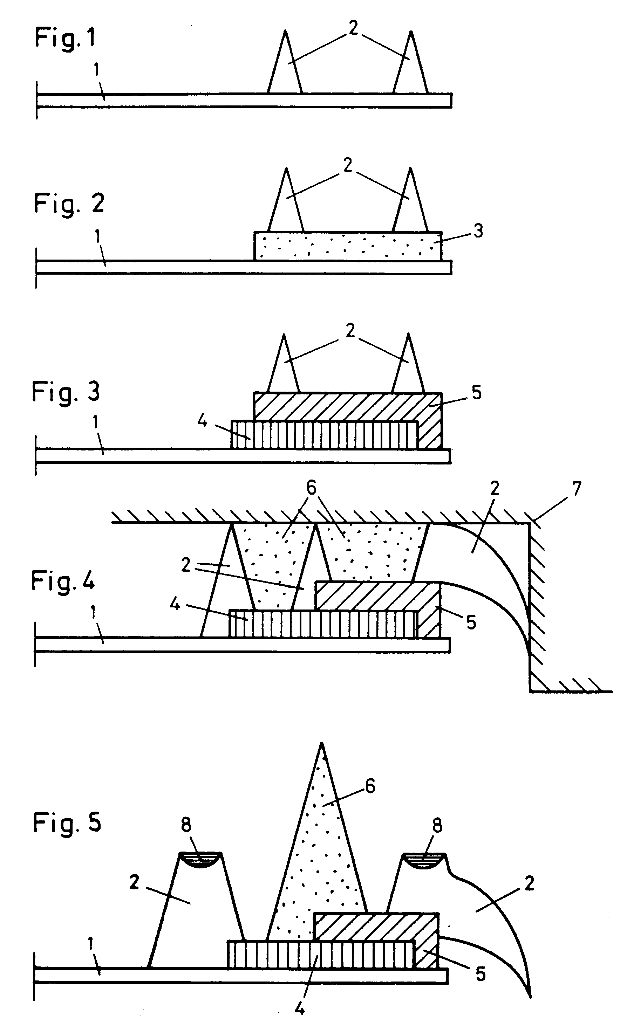

Auch in der USA-Patentschrift Nr. 4 551 372 von Kunert wird die Verklebung einer Windschutzscheibe aus Sicherheitsglas mit dem Fahrzeugrahmen beschrieben. Bei dem dort beschriebenen Verfahren hat die eingesetzte Scheibe aus Sicherheitsglas mindestens zwei Glasschichten, die miteinander durch eine Kunststoffschicht verbunden sind, und die dem Fahrzeuginnenraum zugewandte Glasschicht des Sicherheitsglases wird von der äusseren Glasschicht des Sicherheitsglases überragt, sodass der Randbereich der Windschutzscheibe stufenförmig aufgebaut ist. Der zum Verkleben der Windschutzscheibe eingesetzte Klebstoff ist so fliessfähig, dass durch ihn eine Abdichtung dieses stufenförmigen Bereiches erreicht wird, und somit das Eindringen von Feuchtigkeit in die Kunststoffzwischenschicht des Sicherheitsglases verhindert wird (siehe die Figuren 1, 2, 3 und 4 dieser USA-Patentschrift). Gemäss der in Fig. 5 dargestellten Ausführungsart wird die Luft- und Wasserdichte-Versiegelung des stufenförmigen Randbereiches durch eine härtbare Klebemittelmischung erreicht, die zum Zeitpunkt des Verklebens der Fahrzeugscheibe bereits im vollständig gehärteten und nicht mehr klebefähigen Zustand vorliegt. Dieser Rand aus dem ausgehärteten Kleber ist dementsprechend mit einer rinnenförmigen Vertiefung versehen, in die dann ein weiteres Klebemittel eingebracht wird, welches mit dem bereits vollständig ausgehärteten Klebestoff verträglich sein muss (siehe Spalte 4, Zeilen 1 - 21, dieser Patentschrift).

Das durch Figur 5 der oben genannten USA-Patentschrift kurz veranschaulichte Verfahren der Verankerung einer Fahrzeugscheibe mit einem bereits ausgehärteten, nicht mehr klebefähigen Profil eines ersten Klebstoffes, in das dann das beim Verglasungsvorgang noch klebefähige zweite Klebemittel eingebracht wird, wird detaillierter in der USA-Patentschrift Nr. 4 571 278 und in der deutschen Offenlegungsschrift 3 409 960 beschrieben. Dieses Verfahren wird mit dem englischsprachigen Ausdruck als "Flushglazing" bezeichnet, und es stellt eine weitere Entwicklung der Direktverglasung unter direktem Auftrag eines klebefähigen Klebemittels auf die Glasscheibe oder auf den Fahrzeugflansch dar. (Diese Direktverglasung wird ebenfalls als "Direct Glazing" bezeichnet). Bei dem Verfahren des "Flushglazing" wirkt das Profil des zum Zeitpunkt des Verklebens bereits vollständig ausgehärteten Klebstoffes als Abstandshalter und durch dieses Verfahren ist beim Einbau der Scheiben die Scheibenpositionierung wesentlich vereinfacht und einige Fahrzeughersteller haben bereits begonnen, oder beginnen Anfang 1991, mit dem serienmässigen Einbau von Windschutzscheiben und Heckscheiben nach diesen Verfahren des "Flushglazing".

Bei diesem Verfahren des "Flushglazing", wie es in der deutschen Offenlegungsschrift 3 409 960 und der USA-Patentschrift 4 571 278 beschrieben ist, wurde der zum Zeitpunkt des Verklebens noch klebende Klebstoff nicht in direkten Kontakt mit der Glasscheibe gebracht, sondern das Profil aus dem ersten verfestigbaren Klebstoff wurde direkt auf den Randbereich des Glaskörpers oder auf eine Zwischenschicht aus einem Haftvermittler aufgebracht, und nachdem dieser erste Klebstoff vollständig ausgehärtet und verfestigt war, wurde auf die Oberfläche desselben der zweite Klebstoff aufgebracht, vorzugsweise in Form eines Profils, wobei beispielsweise dieser zweite Klebstoff in eine rillenförmige Ausnehmung des Profils des ersten Klebstoffes eingebracht wurde. Bereits hier ist das Problem der Zwischenhaftung zwischen zwei verschiedenen Klebstoffen erkannt worden. So soll ein erster, ausgehärteter Klebstoff-Teilstrang vor der Applikation des zweiten Klebstoff-Teilstranges entweder chemisch oder mechanisch reaktiviert werden; siehe hierzu die Ansprüche 5 und 6 der deutschen Offenlegungsschrift. Ebenso kann die Kontaktfläche zwischen den beiden Klebstoff-Teilsträngen durch Riffelung vergrössert werden, siehe hierzu den Anspruch 11 der deutschen Offenlegungsschrift, beziehungsweise die Fig. 2, 4 und 5 des USA-Patentes 4 571 278.

Obwohl mit der oben erwähnten chemischen Reaktivierung, beziehungsweise mechanischen Reaktivierung der Oberfläche des Profiles aus dem gehärteten Klebstoff, die Probleme der Haftung des zweiten, noch klebefähigen Klebstoffes, auf dem ersten, bereits vollständig ausgehärteten Klebstoff, gemildert werden können, werden in der Praxis diese Reaktivierungen nicht eingesetzt, und zwar deshalb nicht, weil die Qualität und das Ausmass der Reaktivierung nicht kontrolliert werden können. Ebenfalls würde durch diese Reaktivierung eine neue Arbeitsstation geschaffen, was unweigerlich mit zusätzlichen Kosten verbunden ist.

In allerjüngster Zeit, nämlich in der am 15. März 1989 veröffentlichten europäischen Patentanmeldung 0 307 316, wird eine Autoglasscheibe beschrieben, die für die Direktverklebung mit dem Befestigungsflansch des Fensterrahmens einer Autokarosserie vorgesehen ist. Bei der in Fig. 2 dieser Veröffentlichung dargestellten Ausführungsart befindet sich direkt auf der Autoglasscheibe eine lichtundurchlässige Schicht (5) und auf dieser sind ein inneres Begrenzungsprofil (9) und ein äusseres Begrenzungsprofil (10) so angeordnet, dass sie parallel zueinander verlaufen und in direktem Kontakt mit dieser lichtundurchlässigen Schicht (5) stehen. Die Begrenzungsprofile bestehen aus einer härtenden Klebermasse die zum Zeitpunkt der Verklebung der Autoglasscheibe bereits ausgehärtet ist. Allenfalls können die beiden Begrenzungsprofile (9) und (10) auch unmittelbar auf der Glasscheibe und in direktem Kontakt mit der Glasscheibe angeordnet sein (siehe den Anspruch 1). Zwischen den beiden Begrenzungsprofilen (9) und (10) befindet sich ein Kanal, der für die Aufnahme des Kleberstranges vorgesehen ist, welcher zum Zeitpunkt der Verklebung haftfähige Eigenschaften aufweist und dementsprechend die Direktverklebung mit dem Fensterrahmen der Autokarosserie bewirkt. Dementsprechend steht der klebende Eigenschaften aufweisende Kleberstrang nach seiner Aufbringung entweder ausschliesslich in direktem Kontakt mit der auf der Glasscheibe angeordneten lichtundurchlässigen Schicht (5) oder, falls diese lichtundurchlässige Schicht (5) nicht vorhanden ist, ausschliesslich in direktem Kontakt zu der Glasscheibe.

Bei der in Fig. 1 der erwähnten europäischen Patentveröffentlichung dargestellten Ausführungsart fehlt das äussere Begrenzungsprofil (10) und in diesem Falle wird der Kleberstrang ausserhalb des inneren Begrenzungsprofils (in Fig. 1 mit [2] bezeichnet) so aufgebracht, dass seine untere Kontaktfläche nur mit der auf der Glasscheibe befindlichen lichtundurchlässsigen Schicht (5) in direkter Berührung steht.

Im Zusammenhang mit der Beschreibung der Fig. 2 wird ferner in Spalte 3, Zeilen 30 - 45 erläutert, dass sich die beiden Begrenzungsprofile (9) und (10) nicht nur in direktem Kontakt mit der Glasoberfläche oder der Schicht aus dem lichtundurchlässigen Material, sondern allenfalls auch in direktem Kontakt mit einer aufgebrachten Schicht eines Haftvermittlers befinden können.

In allen Ausführungsarten, welche in der jüngst veröffentlichten europäischen Patentanmeldung 0 307 316 beschrieben oder durch Zeichnungen veranschaulicht sind, ist die Aufbringung des Kleberstranges, welcher bei der Montage der Glasscheiben noch klebende Eigenschaften aufweist, ausschliesslich so vorgesehen, dass seine der Glasscheibe zugewandte Berührungsfläche entweder ausschliesslich in direktem Kontakt mit der Glasscheibe oder ausschliesslich in direktem Kontakt mit einer auf dieser befindlichen lichtundurchlässigen Schicht steht, oder allenfalls in direktem Kontakt mit einer Schicht eines Haftvermittlers.

### BESCHREIBUNG DER ERFINDUNG

Ziel der vorliegenden Erfindung war es, die bei dem Verfahren des "Flushglazings" auftretenden Probleme einer schlechten Haftung eines Profils eines zweiten Klebstoffes, der zum Zeitpunkt des Verklebung des Glaskörpers noch klebende Eigenschaften aufweist, auf einem Profil eines ersten Klebstoffes, das zum Zeitpunkt der Verklebung des Glaskörpers bereits verfestigt ist, und bei der Verklebung als Abstandshalter dient, zu beseitigen.

Bei den Untersuchungen, die zu diesem Zwecke durchgeführt wurden, hat es sich herausgestellt, dass dann, wenn der Klebstoffstrang aus dem ersten Klebstoff nur eine bis drei Wochen alt ist, die Haftung des zweiten zum Zeitpunkt der Verklebung noch klebende Eigenschaften aufweisenden Klebstoffes, im allgemeinen befriedigend ist. Sobald jedoch das Profil des ersten Klebstoffes mehrere Wochen, beziehungsweise Monate, gealtert ist, ehe das zweite Profil des Klebstoffes auf ihm aufgebracht wird, ist die Verklebung selbst dann unbefriedigend, wenn die Klebstoffzusammensetzung des ersten Klebstoffes nahezu identisch mit der Klebstoffzusammensetzung des zweiten Klebstoffes ist.

Bei den durchgeführten Arbeiten wurde ferner festgestellt, dass die Ergebnisse äusserst unberechenbar sind. Schon eine geringe Variation bezüglich irgendwelcher Komponenten, wie zum Beispiel Füllstoffe, Thixotropiermittel, etc. in der Zusammensetzung des ersten Klebstoffes und/oder in der Zusammensetzung des zweiten Klebstoffes, kann zu einer unbefriedigenden Haftung der beiden Klebstoffprofile aufeinander führen.

Diese umfangreichen Versuche, die durchgeführt wurden, zeigten ferner, dass im Gegensatz dazu, die Haftung des ersten Klebstoffes auf dem Glaskörper oder auf einer auf diesem befindlichen Schicht aus einem für Ultraviolettlicht undurchlässigen Material oder einer auf dem Glaskörper befindlichen Schicht aus einem Haftvermittler weit weniger problematisch ist. Während man bisher angenommen hatte, dass der beim "Flushglazing" angewandte zweite Klebstoff, der zum Zeitpunkt der Verklebung des Glaskörpers noch klebende Eigenschaften aufweist, eine besonders gute Haftfähigkeit auf dem Profil des ersten Klebstoffes aufweisen würde und man deshalb beim Verfahren des "Flushglazing" diesen zweiten Klebstoff bei den meisten bisher beschriebenen Arbeitsverfahren auf ein Profil des ersten Klebstoffes aufgebracht hatte, haben die im Zuge der Entwicklung der erfindungsgemässen Glaskörper durchgeführten Versuche überraschenderweise genau das Gegenteil gezeigt. Die Haftung eines Profils des zweiten Klebstoffes direkt auf dem Glaskörper oder auch auf einer Schicht aus einem für Ultraviolettlicht undurchlässigen Material, ist wesentlich besser als die Haftung auf dem bereits ausgehärteten Profil des ersten Klebstoffes, und ausserdem ist die Haftung des zweiten Klebstoffes auf dem Glas oder der UV-Sperrschicht, nicht gegenüber geringfügigen Aenderungen irgendwelcher Bestandteile der Klebemittelschicht empfindlich.

Ueberraschenderweise zeigte es sich, dass die Vorteile des Verfahrens des "Flushglazings", die durch die Wirkung eines Profils eines ersten, bereits ausgehärteten Klebstoffes, als Abstandshalter erzielt werden, beibehalten werden können und dennoch die Nachteile der unberechenbaren Haftung des zweiten, zum Zeitpunkt der Verklebung noch klebende Eigenschaften aufweisenden Klebstoffes auf diesem ersten Klebstoffprofil vermieden werden können, indem man das Profil des zweiten Klebstoffes nicht auf den ersten, bereits ausgehärteten Klebstoff, aufbringt, sondern so aufträgt, dass es in direktem Kontakt mit mindestens zwei unterschiedlichen Oberflächen steht, die aus den folgenden Oberflächen ausgewählt sind:

Oberfläche des Glaskörpers, Oberfläche der für Ultraviolettlicht undurchlässigen Schicht und Oberfläche der Schicht des Haftvermittlers.

Ein Gegenstand der vorliegenden Erfindung ist daher ein Glaskörper, insbesondere eine Glasscheibe, der zur Verklebung mit einem weiteren Material ausgestattet ist, wobei sich auf einer Oberfläche des äusseren Randbereiches des Glaskörpers eine für Ultraviolettlicht im wesentlichen undurchlässige Schicht und/oder eine Schicht aus einem Haftvermittler befindet und wobei im äusseren Randbereich des Glaskörpers in direktem Kontakt mit diesem und/oder in direktem Kontakt mit der allenfalls vorhandenen, für Ultraviolettlicht undurchlässigen Schicht und/oder in direktem Kontakt mit der allenfalls anwesenden Schicht des Haftvermittlers sich mindestens ein Profil aus einem ersten Klebstoff befindet, wobei dieser erste Klebstoff zum Zeitpunkt der Verklebung des Glaskörpers mit dem weiteren Material bereits verfestigt ist und dieses Profil als Abstandshalter dient und wobei ferner mindestens ein Profil eines zweiten Klebstoffs vorhanden ist, wobei dieser zweite Klebstoff zum Zeitpunkt der Verklebung klebende Eigenschaften aufweist. Erfindungsgemäss zeichnet sich dieser Glaskörper dadurch aus, dass das mindestens eine Profil des zweiten Klebstoffes sich im Randbereich des Glaskörpers, jedoch innerhalb des Profils aus dem verfestigten ersten Klebstoff befindet, und das mindestens eine Profil des zweiten Klebstoffes sich mit mindestens zwei der folgenden Oberflächen in direktem Kontakt befindet:
der Oberfläche des Glaskörpers, der Oberfläche der allenfalls vorhandenen für Ultraviolettlicht undurchlässigen Schicht und/oder der Oberfläche der allenfalls vorhandenen Schicht des Haftvermittlers.

Gemäss einer bevorzugten Ausführungsart der Erfindung, besteht das mindestens eine Profil des zweiten Klebstoffes aus einem solchen Klebstoff, der vor seiner Aushärtung oder vollständigen Aushärtung, beziehungsweise Vernetzung, standfest und pastös ist, und welcher nach seiner vollständigen Aushärtung und Vernetzung fest ist. Vorzugsweise ist dieser Klebstoff des zweiten Profils nach seiner vollständigen Aushärtung und Vernetzung flexibel und elastisch.

Gemäss einer weiteren bevorzugten Ausführungsart der Erfindung, besteht auch das erste, zum Zeitpunkt der Verklebung bereits verfestigte Profil, das als Abstandshalter dient, aus einem Klebstoff, der vor seiner Aushärtung oder vollständigen Aushärtung, beziehungsweise Vernetzung, standfest und pastös ist, nach seiner vollständigen Aushärtung und Vernetzung, jedoch fest ist und vorzugsweise ausserdem flexibel und/oder elastisch ist. Bei den erfindungsgemässen Glaskörpern ist vorzugsweise das mindestens eine Profil des zweiten Klebstoffes und speziell bevorzugt, auch das mindestens eine Profil des ersten Klebstoffs, aus einer Gruppe ausgewählt, welche die folgenden Kunstoffmaterialien umfasst:
- Elastomere, insbesondere Polyurethane, Silikone, Polysulfide, synthetische und natürliche Kautschuke,
- flexibilisierte Duromere, insbesondere Epoxide, Phenolharze, Polyurethane, und
- flexibilisierte Thermoplasten, insbesondere Acrylharze, Polyvinylchlorid, Polyamide, thermoplastische Kautschukkombinationen.

Speziell bevorzugt ist das mindestens eine Profil des zweiten Klebstoffes und vorzugsweise ausserdem das mindestens eine Profil des ersten Klebstoffes, aus einem Zweikomponenten-Klebstoff oder einem reaktiven Einkomponenten-Klebstoff aufgebaut, wobei bevorzugte Zweikomponenten-Klebstoffe solche auf Basis einer Komponente mit mindestens einer freien Isocyanatgruppe und einer Härterkomponente und bevorzugte Einkomponenten-Klebstoffe, ebenfalls solche auf Basis einer Komponente mit mindestens einer freien Isocyanatgruppe sind, wobei in diesen Einkomponenten-Klebstoffen die Härtung durch Reaktion der Komponente mit mindestens einer freien Isocyanatgruppe mit Wasser, beziehungsweise Feuchtigkeit der Umgebung und/oder bei Anwesenheit eines verkappten Härters in der Zusammensetzung durch Aktivierung dieses Härters mittels eines Erhitzungsschrittes und/oder durch Aktivierung dieses Härters mittels der Einwirkung von Wasser, beispielsweise Feuchtigkeit der Umgebung, durchführbar ist.

Speziell bevorzugte Klebstoffe, die nach ihrer Auftragung nach Abkühlung auf Zimmertemperatur, noch zähplastisch verformbar sind, und die dann nach der Auftragung durch die Einwirkung von Wasser, insbesondere Luftfeuchtigkeit, zu einem Produkt mit elastischen Eigenschaften härten, sind diejenigen Einkomponenten-Klebstoffe, die in der europäischen Patentveröffentlichung Nr. 244 608, beziehungsweise der europäischen Patentveröffentlichung Nr. 255 572, beide von der Sika AG, beschrieben sind. Die dort beschriebenen Einkomponenten-Klebstoffe enthalten ein nicht vollständig vernetztes Präpolymerisat auf Isocyanatbasis, das noch freie reaktionsfähige Isocyanatgruppen aufweist, und durch dieses reaktive Präpolymerisat wird eine hervorragende Haftung des Klebstoffprofils auf dem Glassubstrat erreicht. Falls der Luftzutritt zu dem Klebstoffprofil verhindert wird, erhält dieses Klebstoffprofil während langer Lagerungsdauer seine plastische Verformbarkeit und Reaktivität. Dementsprechend sind diese Klebstoffe als zweites Klebstoffprofil der erfindungsgemässen Glaskörper speziell bevorzugt. Wenn der Glaskörper mit dem weiteren Material unter Verwendung dieses zweiten Klebstoffprofils verklebt wird, wird dieses verformt, und aufgrund der reaktiven Gruppen des in ihm enthaltenen Präpolymeres auf Isocyanatbasis findet ferner eine hervorragend gute Verklebung mit dem weiteren Material statt. Aufgrund des Zutrittes der Luftfeuchtigkeit nach dem Verklebungsschritt, erfolgt dann die Vernetzung der noch freien Isocyanatgruppen des zweiten Klebstoffes, unter Ausbildung des Produktes mit elastischen und flexiblen Eigenschaften.

Gemäss einer bevorzugten Ausführungsart der Erfindung weist das mindestens eine Profil aus dem ersten Klebstoff oder ein Teilbereich des mindestens einen Profils aus dem ersten Klebstoff, einen Querschnitt in Form eines Dreiecks auf, und das mindestens eine Profil des zweiten Klebstoffs besitzt bei seiner Auftragung ebenfalls einen Querschnitt in Form eines Dreiecks, und dieses zweite Profil ist standfest und pastös, wobei dann bei der Einwirkung der äusseren Kräfte während des Verklebungsvorganges dieses zweite Profil permanent verformbar ist und nach der vollständigen Aushärtung und Vernetzung eine feste Verbindung mit elastischen Eigenschaften gewährleistet.

Bei dem erfindungsgemässen Glaskörper befindet sich das Profil aus dem ersten Klebstoff, das bei der Verklebung des Glaskörpers bereits verfestigt ist, im äusseren Randbereich des Glaskörpers, und das Profil des zweiten Klebstoffes ist ebenfalls im Randbereich des Glaskörpers, jedoch innerhalb des Profils aus dem verfestigten ersten Klebstoff, aufgebracht. Bei der Verklebung des Glaskörpers wird, wie bereits erwähnt, das Profil des zweiten Klebstoffes dauerhaft verformt, und dabei dient das gehärtete Profil des ersten Klebstoffes als sogenannte Klebstoffbremse, die ein Austreten des verformbaren Klebstoffes und damit eine Verschmutzung der Karosserie, verhindert.

Bekanntlich werden Kunststoffe durch die Einwirkung von Ultraviolettlicht nach langen Einwirkungszeiten geschädigt. Es ist daher üblich, entsprechende Profile aus Kunststoff vor dem durch den Glaskörper hindurchtretenden Ultraviolettlicht, durch eine auf den Glaskörper aufgebrachte, für Ultraviolettlicht im wesentlichen undurchlässige Schicht zu schützen. Auch bei den erfindungsgemässen Glaskörpern befindet sich im allgemeinen im äusseren Randbereich, dort wo das mindestens eine Profil aus dem ersten Klebstoff und das mindestens eine Profil aus dem zweiten Klebstoff aufgetragen ist, eine Schicht aus einem Material, das für Ultraviolettlicht im wesentlichen undurchlässig ist, und diese Schicht wird im allgemeinen als "Keramikschicht" bezeichnet.

Gegebenenfalls kann auf dieser Keramikschicht oder auf Teilen dieser Keramikschicht noch eine Schicht eines Haftvermittlers, der auch Primer genannt wird, aufgebracht sein, sodass das mindestens eine Profil aus dem ersten Klebstoff und/oder das mindestens eine Profil aus dem zweiten Klebstoff, mit dieser Zwischenschicht aus dem Haftvermittler in Berührung steht. Da jedoch eine Zwischenschicht aus einem Haftvermittler gegebenenfalls bei der Langzeitverwendung Alterungsprobleme aufweisen kann, wird bei den erfindungsgemässen Glaskörpers im allgemeinen auf eine derartige Zwischenschicht verzichtet.

Insbesondere dann, wenn der zu verklebende Glaskörper eine Windschutzscheibe oder eine Heckscheibe ist, ist es vorteilhaft, das äussere Profil aus dem ersten Klebstoff als Dichtlippe auszubilden oder in Form eines Profils auszubilden, bei welchem ein Teil dieses Profils die Funktion einer Dichtlippe hat.

Bei der Verklebung der erfindungsgemässen Glaskörper, erreicht der zweite Klebstoff manchmal gleich nach dem Verkleben des Glaskörpers mit dem weiteren Material eine ausreichende Festigkeit, sodass eine weitere Fixierung nicht erforderlich ist. Falls erwünscht, kann jedoch die anfängliche Haftung des verklebten Glaskörpers, bis zu dem Zeitpunkt wo der zweite Klebstoff eine ausreichende Festigkeit erlangt hat, noch dadurch verbessert werden, indem man eine anfängliche Fixierung des verklebtten Glaskörpers mit Hilfe eines Haftklebers erreicht.

Gemäss einer weiteren Ausführungsart der erfindungsgemässen Glaskörper, befindet sich dementsprechend in den oberen Bereichen auf dem mindestens einen Profil aus dem ersten Klebstoff, vorzugsweise in einer rillenförmigen Vertiefung dieses Profils, ein Haftklebstoff, wobei gegebenenfalls dieser Haftklebstoff von einer entfernbaren Schutzschicht abgedeckt ist und diese Schicht aus dem Haftklebstoff allenfalls in Form eines doppelseitigen geschäumten oder ungeschäumten Klebebandes ausgebildet ist.

Wenn bei dem erfindungsgemässen Glaskörper das mindestens eine zweite Profil aus dem zweiten Klebstoff aus einer solchen Klebstoffzusammensetzung aufgebaut ist, die bei Einwirkung von Wasser, beispielsweise Luftfeuchtigkeit der Umgebung, zu einer vollständigen Aushärtung oder Vernetzung des anfänglich noch plastisch verformbaren Profils aus dem zweiten Klebstoff führt, dann muss der Glaskörper, beziehungsweise der Bereich des Glaskörpers, auf dem sich das Profil aus dem zweiten Klebstoff befindet, während der Lagerung des Glaskörpers, vor dem Zutritt von Feuchtigkeit geschützt werden. Dies ist beispielsweise der Fall, wenn, wie weiter vorne erläutert, das Profil des zweiten Klebstoffes, ein noch freie Isocyanatgruppen aufweisendes Präpolymer enthält, das dann bei Einwirkung von Feuchtigkeit aufgrund der Reaktionsfähigkeit dieser freien Isocyanatgruppen zu dem festen Produkt mit elastischen Eigenschaften aushärtet.

Gemäss einer speziellen Ausführungsart der Erfindung, enthält also das mindestens eine Profil aus dem zweiten Klebstoff, ein Präpolymer oder es besteht daraus, wobei das Präpolymer und/oder ein in diesem zweiten Klebstoff allenfalls vorhandener verkappter Härter, bei Einwirkung von Wasser, beispielsweise Feuchtigkeit der Umgebung, eine vollständige Aushärtung und Vernetzung dieses zweiten Klebstoffes unter Ausbildung eines festen und vorzugsweise ausserdem flexiblen und/oder elastischen Produktes, bewirkt und das mindestens eine Profil des zweiten Klebstoffes ist vor dem Zutritt von Feuchtigkeit durch eine Schutzschicht oder entsprechende Verpackung bis zu dem Zeitpunkt der Verklebung des Glaskörpers mit einem weiteren Material, geschützt.

Falls sich auf der Oberfläche der Randbereiche der erfindungsgemässen Glaskörper eine für Ultrabiolettlicht im wesentlichen undurchlässige Schicht befindet, dann soll sich das mindestens eine Profil aus dem ersten Klebstoff in direktem Kontakt mit der für Ultraviolettlicht im wesentlichen undurchlässigen Schicht befinden und, falls nur ein Profil aus einem zweiten Klebstoff vorhanden ist, dann soll ein Teilbereich desselben sich in direktem Kontakt mit der für Ultraviolettlicht im wesentlichen undurchlässigen Schicht befinden, während ein weiterer Teilbereich dieses Profils aus dem zweiten Klebstoff sich in direktem Kontakt mit der Glasoberfläche oder allenfalls mit einer Zwischenschicht aus einem Haftvermittler befinden soll. Ferner soll dann, wenn auf dem erfindungsgemässen Glaskörper zwei oder mehr Profile des zweiten Klebstoffes vorhanden sind, sich das eine dieser Profile in direktem Kontakt mit der für Ultraviolettlicht im wesentlichen undurchlässigen Schicht befinden, während mindestens ein weiteres Profil des zweiten Klebstoffes sich in direktem Kontakt mit der Oberfläche des Glaskörpers oder einer allenfalls vorhandenen Zwischenschicht eines Haftvermittlers befinden soll.

Bei den erfindungsgemässen Glaskörpers kann zwischen der für Ultraviolettlicht im wesentlichen undurchlässigen Schicht und der Berührungsfläche des mindestens einen Profils aus dem ersten Klebstoff und/oder einem Teilbereich der Berührungsfläche eines einzigen Profils aus dem zweiten Klebstoff und/oder der Berührungsfläche allenfalls vorhandener weiterer Profile aus dem ersten Klebstoff oder dem zweiten Klebstoff oder in Teilbereichen dieser oder einer dieser Berührungsflächen, zwischen den Klebstoffprofilen und der für Ultraviolettlicht im wesentlichen undurchlässigen Schicht, eine Zwischenschicht aus einem Haftvermittler (Primer) angeordnet sein.

Ein weiterer Gegenstand der vorliegenden Erfindung ist ein Verfahren zur Herstellung des erfindungsgemässen Glaskörpers, insbesondere einer Glasscheibe, der auf einer Oberfläche des äusseren Randbereiches des Glaskörpers eine für Ultraviolettlicht im wesentlichen undurchlässige Schicht und/oder eine Schicht aus einem Haftvermittler aufweist, wobei dieses Verfahren dadurch gekennzeichnet ist, dass man auf den äusseren Randbereich des Glaskörpers, in direktem Kontakt mit diesem und/oder in direktem Kontakt mit einer allenfalls vorhandenen, für Ultraviolettlicht im wesentlichen undurchlässigen Schicht und/oder in direktem Kontakt mit einer allenfalls vorhandenen Schicht eines Haftvermittlers, mindestens ein Profil eines ersten Klebstoffes aufträgt, wobei dieser erste Klebstoff bei der Aufbringung ungehärtet oder nicht vollständig gehärtet, beziehungsweise vernetzt ist, und pastöse Eigenschaften besitzt, jedoch standfest ist, und dass man dieses mindestens eine Profil aus dem ersten Klebstoff nach seiner Aufbringung aushärten und vernetzen lässt, wodurch es fest wird und vorzugsweise ausserdem eine Flexibilität und/oder Elastizität erlangt, und dass man innerhalb des mindestens einen Profiles aus dem ersten Klebstoff mindestens ein Profil eines zweiten Klebstoffes so aufträgt, dass das Profil aus dem mindestens einen zweiten Klebstoff mit mindestens zwei der folgenden Oberflächen in direkten Kontakt kommt, nämlich der Oberfläche des Glaskörpers, der Oberfläche der allenfalls vorhandenen, für Ultraviolettlicht undurchlässigen Schicht und/oder der Oberfläche der allenfalls vorhandenen Schicht eines Haftvermittlers, und wobei das Profil des zweiten Klebstoffes aus einem solchen Klebstoff besteht, der vor seiner Aushärtung oder vollständigen Aushärtung, beziehungsweise Vernetzung, standfest und pastös, jedoch bei Einwirkung äusserer Kräfte, permanent verformbar ist, und welcher nach seiner vollständigen Aushärtung und Vernetzung, fest ist und ausserdem vorzugsweise eine Flexibilität und/oder Elastizität aufweist und dass die vollständige Aushärtung des Profils aus dem mindestens einen zweiten Klebstoffes, erst bei der Verklebung des Glaskörpers mit einem weiteren Material und/oder unmittelbar vor der Verklebung des Glaskörpers mit einem weiteren Material in Gang gebracht wird.

Bei diesem Herstellungsverfahren wird das mindestens eine Profil aus dem ersten Klebstoff zweckmässigerweise bei dem Produzenten des Glaskörpers auf diesen aufgebracht und aushärten und vernetzen gelassen, sodass dieses bei der Verklebung als Abstandshalter dienende Profil seine endgültige Festigkeit und vorzugsweise ausserdem die erwünschte Flexibilität und/oder Elastizität erlangt. Dies ist vorteilhaft, weil dann bei der Verpackung der Glaskörper und bei deren Transport dieses als Abstandshalter dienende Profil auch einen Schutz der Glaskörper gegenüber mechanischer Beanspruchung darstellt. Beispielsweise können mehrere Windschutzscheiben gleicher Gestalt in einer einzigen Packung übereinander gestapelt werden, weil die entsprechenden Profile aus dem ersten Klebstoff als Abstandshalter zwischen den einzelnen Windschutzscheiben wirken.

Bei dem Verfahren zur Herstellung der Glaskörper kann das Profil aus dem zweiten Klebstoff, das vor seiner Aushärtung oder vollständigen Aushärtung, beziehungsweise Vernetzung, standfest und pastös ist, jedoch bei Einwirkung äusserer Kräfte permanent verformbar ist, vor dem Profil aus dem ersten Klebstoff, gleichzeitig mit dem Profil aus dem ersten Klebstoff, oder nach dem Profil aus dem ersten Klebstoff, aufgetragen werden.

Dementsprechend ist es möglich, das mindestens eine Profil des zweiten Klebstoffes ebenfalls bereits bei dem Hersteller des Glaskörpers auf diesen aufzutragen. Wenn in diesem Fall das Profil aus dem zweiten Klebstoff aus einer solchen einkomponentigen Klebstoffzusammensetzung besteht, die einen verkappten Härter enthält und dieser verkappte Härter dann durch einen Erhitzungsschritt, unmittelbar vor der Verklebung des Glaskörpers, aktiviert wird, dann sind bei der Verpackung derartiger, mit dem ersten Klebstoffprofil und auch dem zweiten Klebstoffprofil versehenen Glaskörper keine speziellen Vorsichtsmassnahmen erforderlich. Wenn jedoch das auf den Glaskörper aufgebrachte, mindestens eine Profil des zweiten Klebstoffes, aus einer solchen Einkomponenten-Klebstoffzusammensetzung aufgebaut ist, die durch die Einwirkung von Wasser vollständig aushärtet, dann muss natürlich bei den entsprechenden Glaskörpern das aufgebrachte Profil aus dem zweiten Klebstoff während der Lagerung vor einem Zutritt von Wasser geschützt werden, beispielsweise durch einen entsprechende Verpackung, beziehungsweise durch die Aufbringung einer wieder entfernbaren wasserundurchlässigen Schicht, beispielsweise einem abziehbaren Streifen eines inerten Kunststoffes.

Es kann jedoch auch vorteilhafter sein, das Profil aus dem zweiten Klebstoff erst unmittelbar vor der Verklebung des Glaskörpers mit dem weiteren Material auf diesen aufzutragen, beispielsweise beim Fahrzeughersteller.

Je nach den Gegebenheiten kann die Auftragung des mindestens einen Profils aus dem zweiten Klebstoff von Hand, mit einfachen Kartuschen, durch Auftragungsvorrichtungen zur grosstechnischen Bearbeitung, insbesondere Roboter, erfolgen.

Ein weiterer Gegenstand der vorliegenden Erfindung ist die Verwendung des erfindungsgemässen Glaskörpers, insbesondere einer Glasscheibe zur Verklebung mit mindestens einem weiteren Material, wobei sich auf einer Oberfläche des äusseren Randbereiches des Glaskörpers eine für Ultraviolettlicht im wesentlichen undurchlässige Schicht und/oder eine Schicht aus einem Haftvermittler befindet, und auf dem Glaskörper im äusseren Randbereich desselben mindestens ein Profil aus einem ersten, bereits verfestigten Klebstoff, und innerhalb desselben mindestens ein Profil eines zweiten Klebstoffes vorhanden ist, der zum Zeitpunkt der Verklebung klebende Eigenschaften aufweist und sich mit mindestens zwei der folgenden Oberflächen in direktem Kontakt befindet:
der Oberfläche des Glaskörpers, der Oberfläche der allenfalls vorhandenen, für Ultraviolettlicht undurchlässigen Schicht und/oder der Oberfläche der allenfalls vorhandenen Schicht des Haftvermittlers, und wobei diese Verwendung dadurch gekennzeichnet ist, dass man das mindestens eine Profil des zweiten Klebstoffes mit dem weiteren Material unter Einwirkung von äusseren Kräften, in Kontakt bringt, wobei während dieses Verklebungsvorgangs das Profil des mindestens einen zweiten Klebstoffes permanent verformt wird und an dem weiteren Material haften bleibt, und dann nach der vollständigen Aushärtung und Vernetzung dieses zweiten Klebstoffes, eine feste Zwischenschicht ausgebildet wird, wobei diese Zwischenschicht vorzugsweise ausserdem eine Flexibilität und/oder Elastizität aufweist, und dass bei der Durchführung des Verklebungsvorganges, das auf dem Glaskörper vorhandene, mindestens eine Profil aus dem ersten, bereits verfestigten Klebstoff, als Abstandshalter dient.

Wie bereits erwähnt wurde, liegt bei speziell bevorzugten erfindungsgemässen Glaskörpern, das mindestens eine Profil des zweiten Klebstoffes, zum Zeitpunkt der Verklebung des Glaskörpers, in ungehärtetem oder nicht vollständig ausgehärtetem, beziehungsweise vernetztem Zustand vor, und in diesem Falle wird dann bei der Verwendung entsprechender Glaskörper die vollständige Aushärtung, beziehungsweise Vernetzung des Klebstoffprofils, erst unmittelbar vor der Verklebung in Gang gebracht, und die vollständige Aushärtung, beziehungsweise Vernetzung des zweiten Klebstoffes, findet erst dann statt, nachdem der Glaskörper mit dem zu verklebenden Material unter Druck in Berührung gebracht worden ist.

Gemäss einer bevorzugten Ausrührungsart wird bei der Verwendung der erfindungsgemässen Glaskörper das mindestens eine Profil aus dem ersten Klebstoff beim Hersteller des Glaskörpers auf den Glaskörper aufgebracht, und das mindestens eine Profil des zweiten Klebstoffes entweder
a) ebenfalls beim Hersteller des Glaskörpers aufgebracht, wobei Vorkehrungen getroffen werden, dass eine Aushärtung oder vollständige Aushärtung, beziehungsweise Vernetzung, des Profils aus dem zweiten Klebstoff, während der anschliessenden Lagerung des Glaskörpers, verhindert, beispielsweise durch eine feuchtigkeitsdichte Verpackung, oder
b) das mindestens eine zweite Profil des zweiten Klebstoffes wird erst unmittelbar vor der Verklebung mit dem weiteren Material auf die Oberfläche des äusseren Randbereiches des Glaskörpers aufgebracht.

Sowohl bei der oben erwähten Variante (a) als auch bei der Variante (b), muss gewährleistet sein, dass das mindestens eine Profil des zweiten Klebstoffes in dem Randbereich des Glaskörpers, jedoch innerhalb des mindestens einen Profils des ersten Klebstoffes, aufgebracht wird, damit das Profil des ersten Klebstoffes als Klebstoffbremse wirkt, und es muss ferner gewährleistet sein, dass dann, wenn nur ein einziges Profil eines zweiten Klebstoffes aufgebracht wird, dieses in direktem Kontakt mit mindestens zwei der folgenden Oberflächen steht, die aufgewählt sind aus der Oberfläche des Glaskörpers, der Oberfläche der allenfalls vorhandenen, für Ultraviolettlicht undurchlässigen Schicht und/oder der Oberfläche der allenfalls vorhandenen Schicht eines Haftvermittlers, und wobei dann, wenn zwei oder mehr Profile des zweiten Klebstoffes aufgebracht werden, diese mit zwei unterschiedlichen Oberflächen aus der oben genannten Gruppe von Oberflächen in Berührung stehen.

In Figur 1 wird ein Glaskörper zu Vergleichszwecken veranschaulicht, und in den Fig. 2 bis 5 werden bevorzugte Ausführungsarten der erfindungsgemässen Glaskörper näher erläutert.

Der in Fig. 1 dargestellte Glaskörper zu Vergleichszwecken unterscheidet sich von dem erfindungsgemässen Glaskörper dahingehend, dass sich in den Randbereichen des Glaskörpers weder eine für Ultraviolettlicht im wesentlichen undurchlässige Schicht noch eine Schicht aus einem Haftvermittler befindet.

Die in den Fig. 2, 3, 4 und 5 dargestellten Glaskörper sind erfindungsgemäss Glaskörper, bei denen sich in dem Randbereich auf der Oberfläche des Glaskörpers, noch mindestens eine Zwischenschicht befindet, die entweder aus einem für Ultraviolettlicht undurchlässigen Material (Keramikaschicht) oder aus einem Haftvermittler (Primer) besteht, oder es befinden sich in den äusseren Randbereichen des Glaskörpers sowohl eine Zwischenschicht aus für Ultraviolettlicht im wesentlich undurchlässigem Material als auch eine Schicht aus einem Haftvermittler.

In der Fig. 1 zu Vergleichszwecken und in den Fig. 2 bis 5 sind mögliche Querschnittsprofile der Glaskörper dargestellt. Sowohl bei dem Glaskörper zu Vergleichszwecken, der in Fig. 1 veranschaulicht ist, als auch bei den in Fig. 2 und 3 dargestellten Ausführungsarten der Erfindung, befinden sich auf dem Glaskörper, der in der dargestellten Form eine Glasscheibe ist, in den äusseren Randbereichen zwei Dreiecksprofile aus dem ersten Klebstoff, der zum Zeitpunkt der Verklebung bereits vollständig gehärtet ist. Das mindestens eine Profil eines zweiten Klebstoffes wird bei dem in Fig. 1 dargestellten Vergleichsbeispiel und auch bei den in Fig. 2 und 3 der dargestellten Ausführungsformen zwischen die beiden Klebstoffprofile aus dem ersten Klebstoff aufgebracht. Gegebenenfalls kann zusätzlich ein weiteres Profil des zweiten Klebstoffes innerhalb des inneren in Fig. 1, 2 und 3 dargestellten Dreicksprofiles aus dem ersten Klebstoff aufgebracht werden.

In Figur 1, die zu Vergleichszwecken dient, wird eine Glasscheibe 1 gezeigt, auf der sich weder eine für Ultraviolettlicht undurchlässige Schicht, noch eine Schicht aus einem Haftvermittler befindet und somit stehen beide Profile 2 aus dem ersten Klebstoff in direktem Kontakt mit der Glasscheibe und auch das mindestens eine Profil des zweiten Klebstoffes kann in diesem Fall nur so aufgebracht werden, dass es ausschliesslich mit der Glasoberfläche in Kontakt kommt.

In Fig. 2 wird schematisch in Form eines Querschnittes gezeigt, dass der erfindungsgemässe Glaskörper 1 in seinem Randbereich eine Zwischenschicht 3 aufweisen muss, wobei diese Zwischenschicht 3 entweder ein für Ultraviolettlicht im wesentlichen undurchlässiges Material (Keramikrand) oder ein Haftvermittler (Primer) ist, oder allenfalls eine beliebige Kombination aus Keramikrand und Primer darstellt.

Bei der in Fig. 2 veranschaulichten Ausführungsart befindet sich sowohl das linke Profil 2 aus dem ersten Klebstoff als auch das rechte Profil 2 auf der erwähnten Zwischenschicht 3. Wahlweise kann sich jedoch das linke Profil auch ganz auf dem Glaskörper befinden, oder es kann den Glaskörper 1 und die Zwischenschicht 3 in gleichen Teilen oder ungleichen Teilen decken. Dadurch wird eine Haftung dieses Profils 2 auf zwei verschiedenen Materialien hergestellt.

Bei der in Fig. 2 dargestellten Ausführungsart der Erfindung kann auch das linke Profil 2 aus dem ersten Klebstoff ganz weggelassen werden, und in vielen Anwendungsgebieten ist diese Ausführungsart gegenüber der dargestellten Ausführungsart mit 2 Profilen 2 aus dem ersten Klebstoff bevorzugt. In diesem Falle wird das Profil des zweiten Klebstoffes innerhalb des einzigen Profiles 2 so aufgetragen, dass bei der Montage der Glasscheibe der Klebstoff des zweiten Klebstoffstranges sowohl mit der Glasscheibe 1 als auch mit Zwischenschicht 3 in Berührung kommt, und somit der Kontakt mit den beiden unterschiedlichen Schichten gewährleistet ist.

Wenn in der in Fig. 2 dargestellten Ausführungsart sowohl das linke Profil 2 als auch das rechte Profil 2 aus dem ersten Klebstoff in direktem Kontakt mit der Zwischenschicht 3 steht, dann müssen 2 Profile des zweiten Klebstoffes aufgebracht werden, eines in der Rille zwischen den beiden Profilen 2 und eines innerhalb des linken Profiles 2. Dadurch wird dann gewährleistet, dass bei der Montage der zweite Klebstoff sowohl in direkte Berührung mit der Zwischenschicht 3 als auch mit dem Glaskörper 1 kommt.

In Figur 3 wird schematisch in Form eines Querschnittes gezeigt, dass sich auf dem Glaskörper 2 eine Schicht aus einem für Ultraviolettlicht im wesentlichen undurchlässigen Material (4) befindet. Diese Schicht kann auch aus einer für Licht undurchlässigen Einbrennfarbe bestehen. Ueber dieser für sichtbares Licht und Ultraviolettlicht undurchlässigen Schicht befindet sich eine Schicht aus einem Haftvermittler 5. Die Schicht aus dem Haftvermittler 5 kann die undurchsichtige Schicht 4 vollständig oder teilweise bedecken. Der Haftvermittler 5 kann auch wenigstens eine Randstelle der undurchsichtigen Schicht 4 seitlich umgeben. In Figur 3 ist die rechte Randstelle als seitlich umgeben dargestellt. Auf dem Haftvermittler 5 befinden sich die beiden Profile 2 des ersten Klebstoffes. Wahlweise kann sich nun das linke Profil 2 ganz auf dem Haftvermittler befinden, oder es kann, wenn der Haftvermittler 5 die undurchsichtige Schicht 4 nicht vollständig bedeckt, den Haftvermittler 5 und die undurchsichtige Schicht 4 in gleichen oder ungleichen Teilen bedecken. Wenn der Haftvermittler 5 die undurchsichtige Schicht 4 nicht vollständig bedeckt, kann das linke Profil 2 auch den Haftvermittler 5, die undurchsichtige Schicht 4 und den Glaskörper 1 in gleichen oder ungleichen Teilen bedecken. Dadurch wird eine Haftung des Profils auf drei verschiedenen Materialien hergestellt.

Das linke Profil 2 kann sich aber auch vollständig auf der undurchsichtigen Schicht 4 befinden. Das linke Profil 2 kann sich aber auch vollständig auf dem Glaskörper 2 befinden. Es ist aber auch möglich, dass das linke Profil 2 die undurchsichtige Schicht 4 und den Glaskörper 1 in gleichen oder ungleichen Teilen bedeckt. Dadurch wird eine Haftung des Profils auf zwei verschiedenen Materialien hergestellt.

Bei der in Figur 3 dargestellten Ausführungsarten der Erfindung, kann das im Inneren des Glaskörpers angeordnete Profil 2 aus dem ersten Klebstoff auch weggelassen werden, und in vielen Anwendungsgebieten ist diese Ausführungsart gegenüber der dargestellten Ausführungsart mit zwei Profilen aus dem ersten Klebstoff sogar bevorzugt.

Bei den in Figur 2 und 3 dargestellten Ausführungsarten, wird, wie erwähnt, das Profil aus dem zweiten Klebstoff noch auf den Glaskörper aufgetragen werden, und zwar links von dem rechten Profil des ersten Klebstoffes (2), sodass dieses äussere Profil des ersten Klebstoffes (2) als "Klebstoffbremse" wirkt, sobald da Profil des plastisch verformbaren zweiten Klebstoffes beim Klebevorgang verformt, beziehungsweise zerdrückt wird.

In Figur 4 wird schematisch in Form eines Querschnittes ein in einem Rahmen eingeklebter erfindungsgemässer Glaskörper gezeigt. Auf dem Glaskörper 1 befindet sich eine undurchsichtige Schicht 4. Diese Schicht 4 wird teilweise von einem Haftvermittler 5 bedeckt. Der Haftvermittler 5 kann auch wenigstens eine Randstelle der undurchsichtigen Einbrennfarbe 4 seitlich umgeben. In Figur 4 ist die rechte Randstelle als seitlich umgeben dargestellt.

Das rechte Profil 2 des ersten Klebstoffes hat die Form einer Dichtlippe und befindet sich vollständig auf dem Haftvermittler 5. Das mittlere Profil 2 des ersten Klebstoffes bedeckt die undurchsichtige Einbrennfarbe 4 und den Haftvermittler 5 in gleichen oder ungleichen Teilen.

Gemäss einer mehr bevorzugten Ausführungsart des in Figur 4 dargestellten Schemas ist jedoch das mittlere Profil 2 des ersten Klebstoffes nicht vorhanden. Auch das linke Profil 2 des ersten Klebstoffes kann nicht vorhanden sein. Bei der in Figur 4 dargestellten Ausführungsart, bedeckt das linke Profil 2 des ersten Klebstoffes die undurchsichtige Einbrennfarbe 4 und den Glaskörper 1 in gleichen oder ungleichen Teilen. Dadurch wird eine Haftung der Profile 2 auf verschiedenen Materialien hergestellt.

Bei der in Figur 4 dargestellten Ausführungsart haben sich vor der Verklebung der Glasscheibe Profile des zweiten noch permanent verformbaren Klebstoffes 6 (vorzugsweise ebenfalls in Form einer Dreiecksraupe) sowohl zwischen dem rechten und dem mittleren Profil des ersten Klebstoffes 2, als auch zwischen dem mittleren und linken Profil des ersten Klebstoffes 2, befunden. Die Dreiecksprofile des zweiten Klebstoffes 6 haben die Profile des ersten Klebstoffes 2 in der Höhe sogar überragt. Bei der Verklebung des Glaskörpers 1 mit dem weiteren Material 7, sind dann die beiden Profile des zweiten Klebstoffes 6 permanent verformt, also zerquetscht worden, sodass im verklebten Zustand der Klebstoff 6 den Zwischenraum zwischen den Profilen des ersten Klebstoffes 2 vollständig ausfüllt. Damit haftet nach dem Einkleben der Glasscheibe der verfestigte Klebstoff 6 nun einerseits auf dem Rahmen 7 und andererseits auf der undurchsichtigen Schicht 4 und dem Haftvermittler 5.

Wenn sich das linke Profil 2 vollständig auf dem Glaskörper 1 befindet und noch ein Abstand zwischen diesem Profil und der undurchsichtigen Schicht 4 vorhanden ist, so haftet der Klebstoff 6 zusätzlich noch auf der Oberfläche des Glaskörpers 1. Bei der in Figur 4 dargestellten Ausführungsart kann allenfalls sowohl das mittlere Klebstoffprofil aus dem ersten Klebstoff 2 als auch das innerste Klebstoffprofil aus dem ersten Klebstoff 2 fehlen, und in diesem Falle wird dann zweckmässigerweise nur ein einziges Klebstoffprofil aus dem zweiten Klebstoff 6 aufgetragen.

In Figur 5 wird schematisch in Form eines Querschnittes gezeigt, dass sich auf dem Glaskörper 1 eine undurchsichtige Schicht 4 befindet. Darauf befindet sich der Haftvermittler 5, welcher die undurchsichtige Schicht 4 vollständig oder teilweise bedecken kann. Der Haftvermittler 5 kann auch wenigstens eine Randstelle der undurchsichtigen Schicht 4 seitlich umgeben. In Figur 5 ist die rechte Randstelle als seitlich umgeben dargestellt. Auf dem Haftvermittler 5 befindet sich das rechte Profil 2 des ersten Klebstoffes, welches die Form einer Dichtlippe hat. Alle Modifikationen, wie sie bei der Diskussion von Figur 3 und 4 beschrieben sind, sind auch hier möglich. Auf den oberen Teilen der beiden Profile 2 des ersten Klebstoffes befindet sich ein Haftklebstoff 8. Im Raum zwischen den Profilen 2 befindet sich das Profil des zweiten Klebstoffes 6. Es ist auch möglich, dass das linke Profil 2 vollständig aus einem Haftklebstoff 8 besteht.

Werden nun solche Glaskörper, vorzugsweise Glasscheiben, wir sie in Figur 5 dargestellt sind, in einen Rahmen gepresst, so übernimmt der Haftklebstoff 8 die Funktion des sofortigen Fixierens der Scheibe. Diese Fixierung muss mindestens so lange andauern, beispielsweise 3 bis 7 Tage, bis sich die strukturellen Kräfte des Klebstoffes 6 entsprechend stark entwickelt haben. Wenn als Profil des zweiten Klebstoffes 6 ein solcher Klebstoff verwendet wird, dessen vollständige Vernetzung durch die Einwirkung von Wasser erfolgt, dann hat dieser Klebstoff im allgemeinen eine sogenannte "offene Zeit", in der die Verklebung stattfinden kann, von mehr als zwei Stunden, sobald der Feuchtigkeitszutritt gewährleistet wird.

Das Profil aus dem zweiten Klebstoff 6 kann bei der in Figur 5 dargestellten Ausführungsart mit Vorteil auch ein solcher Einkomponenten-Klebstoff sein, der unmittelbar vor der Verklebung durch einen Erhitzungsschritt aktiviert wird.

Bei der in Figur 5 dargestellten Ausführungsart ist es in keiner Weise schädlich, wenn der Haftklebstoff 8 dann seine Hafteigenschaften vollständig oder teilweise verliert, sobald der zweite Klebstoff 6 vollständig oder nahezu vollständig ausgehärtet oder vernetzt ist und damit die Funktion einer alterungsbeständigen Verklebung übernommen hat.

Sobald bei der in Figur 5 dargestellten Ausführungsart die Verklebung mit dem weiteren Material stattgefunden hat, ist durch den Druck bei der Verklebung der noch klebefähige und dauerhaft verformbare Klebstoff 6 in den Zwischenraum zwischen das äussere Profil 2 und das innere Profil 2 des ersten Klebstoffes gepresst worden. Die Struktur ist dann ähnlich derjenigen, die in Figur 4 dargestellt ist, wobei jedoch das mittlere Profil aus dem ersten Klebstoff 2 fehlt.

Bei den in Figur 4 und in Figur 5 dargestellten Ausführungsarten sieht man, dass durchaus der zweite Klebstoff 6 nach der erfolgten Verklebung des Glaskörpers mit dem Profil des ersten Klebstoffes in Berührung stehen kann und allenfalls auch eine dauerhafte Verklebung an den in Figur 4 dargestellten Berührungsstellen zwischen den Profilen des ersten Klebstoffes 2 und dem zweiten Klebstoff 6 erfolgen kann. Falls aber die Verklebung an diesen Klebestellen zwischen dem ersten Klebstoff 2 und dem zweiten Klebstoff 6 mangelhaft ist, hat dies auf die gesamte Verklebung keinen nachteiligen Einfluss, weil die entsprechende Verankerung der Glasscheibe 1 auf dem weitereren Material 7 durch den Kontakt des beim Einkleben verpressten Profils aus dem zweiten Klebstoff 6 mit dem Glaskörper und mindestens einer darauf befindlichen oder zwei unterschiedlichen derartigen Schichte und dem weiteren Material 7 gewährleistet ist.

Bei den erfindungsgemässen Glaskörpern kann das mindestens eine Profil aus dem ersten Klebstoff und das mindestens eine Profil aus dem zweiten Klebstoff, eine beliebige Form haben, sodass der entsprechende Querschnitt beispielsweise nicht die Form eines Dreiecks, sondern die Form eines Vierecks, beispielsweise eines Rechtecks, eines Trapezes, eines Trapezoides oder eines Quadrates haben kann. Die für Ultraviolettlicht undurchlässige Schicht, beispielsweise eine Schicht aus einem sogenannten Keramikmaterial oder einer Einbrennfarbe, die in Figur 2 mit 3, und in den Figuren 3, 4 und 5 mit 4 veranschaulicht ist, kann beispielsweise eine Dicke von etwa 200 Mikrometer bis etwa 500 Mikrometer aufweisen.

Falls eine Schicht aus einem Haftvermittler anwesend ist (in Figur 2 mit 3 veranschaulicht, in den Figuren 3, 4 und 5 mit 5 veranschaulicht), dann kann diese beispielsweise eine Dicke von 200 Mikrometern aufweisen.

Wenn der erfindungsgemässe Glaskörper eine Glasscheibe ist, dann hat diese im allgemeinen eine Dicke von 2 bis 5 mm.

Es wurden Tests durchgeführt, die zeigten, dass das Profil aus dem zweiten Klebstoff auf den verschiedensten Glassorten eine hervorragend gute Haftung aufweist. Dementsprechend kann das Glas des Glaskörpers aus irgendeinem beliebigen Glas bestehen, wie zum Beispiel Kristallglas, beispielsweise Bleiglas, Verbundglas, "float glass" oder Pyrex-Glas, sein.

Das weitere Material, mit dem die erfindungsgemässen Glaskörper verklebt werden sollen, kann aus irgendeinem beliebigen Material bestehen, und auch eine beliebige Form aufweisen, weil ja die Profile aus dem zweiten Klebstoff noch permanent verformbar sind. Dementsprechend kann das weitere Material irgendein Metall oder eine Metall-Legierung sein, wie zum Beispiel Aluminium, Eisen, Eisenlegierungen, wie Stahl, und die entsprechenden Metalle können ferner beliebige Oberflächenbeschichtungen aufweisen, beispielsweise lackiert sein. Des weiteren kann das weitere Material auch Holz, irgendein silikathaltiges Material, wie zum Beispiel Glas, Naturstein oder ein Baukörper sein, beispielsweise Beton. Auch mit Steinen, die nicht silikathaltig sind, wie Marmor, werden hervorragende Haftungen erhielt. Des weiteren kann das weitere Material auch aus einem Kunststoff bestehen, beispielsweise einem glasfaserverstärkten Kunstoff, und als Kunststoffmaterialien seien Polyester, Expoyharze, Polycarbonate, Polyvinylchlorid und Additionspolymerisate genannt, wie ABS.

Obwohl ein bevorzugtes Anwendungsgebiet der erfindungsgemässen Glaskörper die Verklebung der Glaskörper im Fahrzeugbau darstellt, sind die entsprechenden Glaskörper auch zur Herstellung von Isolierglas geeignet und es werden auch Vorteile bei der Verwendung zur Herstellung von Glasfassaden erzielt.

Falls eine Schicht eines Haftvermittlers anwesend ist, dann kann diese vorzugsweise aus einem silanmodifizierten Polyurethan bestehen, z.B. einem solchen, wie es in den USA-Patentschriften 3 453 243, 3 627 722 und 3 707 521 beschrieben ist. Es sind jedoch auch Haftvermittler oder Primer auf Basis von Methacrylat oder Polyvinylbutyral, usw. allenfalls verwendbar.

Die Erfindung sei nun anhand eines Ausführungsbeispiels näher erläutert.

### Beispiel

Die verwendeten Glasscheiben sind bereits beim Hersteller mit einer Schicht aus einem für Ultraviolettlicht undurchlässigen Material in ihren Randbereichen versehen worden, und diese Randbereiche werden als Keramikrand bezeichnet.

Der eine Rand, auf dem das Profil aus dem ersten Klebstoff aufgetragen werden soll, wird dann mit einem Reiniger vorbehandelt.

Zur Reinigung des Scheibenrandes eignet sich beispielsweise das Produkt, das im Handel unter der Bezeichnung "Sika-Cleaner 205" erhältlich ist. Nachdem die im Reinigungsmittel allenfalls vorhandenen Lösungsmittel vollständig abgedampft sind (Einhaltung einer bestimmten Ablüftzeit), wird auf den gereinigten Scheibenrand ein Haftvermittler aufgetragen, beispielsweise das Produkt, das unter der Bezeichnung "Sika-Primer 206 J" im Handel erhältlich ist. Bei diesem Produkt handelt es sich um einen sogenannten schwarzen Primer. Nach der Auftragung des Haftvermittlers oder Primers, muss wieder eine bestimmte Ablüftzeit eingehalten werden, damit die entsprechenden Lösungsmittel vollständig von der Scheibenoberfläche abgedampft sind.

Anschliessend wird dann auf den Scheibenrand das Profil des ersten Klebstoffes in Form einer sogenannten Raupe aufgetragen. Der verwendete Klebstoff war ein Klebstoff auf Basis eines Polyurethanpräpolymeren mit freien, reaktionsfähigen Isocyanatgruppen. Dieses Profil des ersten Klebstoffes hatte sofort eine sehr gute Haftung auf dem Scheibenrand und es war sofort nach der Auftragung standfest, das heisst es trat kein Absacken oder keine Verformung des aufgetragenen Klebestoffprofiles auf. Dieses erste Klebestoffprofil wurde dann durch die Einwirkung der Luftfeuchtigkeit der Umgebung vollständig aushärten gelassen.

Nach der Aushärtung hatte das Profil aus dem ersten Klebestoff die folgenden Funktionen:
Abstandhalter bei der Verklebung,
Klebstoffbremse,
Abdeckung des Flansches.

Die mit dem ersten Klebstoffprofil versehene Fahrzeugscheibe wurde nach dem vollständigen Aushärten dieses ersten Klebstoffes verpackt und an den Hersteller der Fahrzeuge geliefert.

Der Fahrzeughersteller brachte dann innerhalb des Profils aus dem ersten Klebstoff das Profil aus dem zweiten Klebstoff auf, und dieses Profil war nach der Aufbringung noch plastisch verformbar, hatte jedoch bereits eine gute Standfestigkeit. Die Aufbringung dieses zweiten Klebstoffprofils, das klebende Eigenschaften besass, erfolgte in Form eines Profiles mit einem dreieckigen Querschnitt, und diese sogenannte Aktivraupe wird daher auch als Dreiecksraupe bezeichnet.

Die Dreiecksraupe wurde auf der Fahrzeugscheibe so positioniert, dass sie auf die Oberfläche des schwarzen Primers und auf die Oberfläche des Keramikrandes aufgebracht wurde, wobei vor der Aufbringung auf dem Keramikrand zweckmässigerweise wieder eine Reinigung der Oberfläche erfolgte, beispielsweise mit dem gleichen Reiniger, der bereits oben beschrieben wurde, nämlich mit dem Produkt, das im Handel unter der Bezeichnung Sika-Cleaner 205 erhältlich ist. Das Profil aus dem zweiten Klebstoff war wieder ein Profil aus einem Präpolymeren mit noch freien, reaktiven Isocyanatgruppen, nämlich ein entsprechender Polyurethanklebstoff. Typische Beispiele für derartige Klebstoffe sind in den europäischen Patentveröffentlichungen Nr. 0 244 608 und 0 255 572 der Firma Sika beschrieben. Ein derartiges Produkt ist ferner im Handel unter der Bezeichnung Sikaflex-250 BD-1 erhältlich.

Wenige Minuten nach dem Auftragen des Profiles aus dem zweiten Klebstoff, wird die Scheibe in den Fahrzeugflansch eingesetzt. Durch die Luftfeuchtigkeit der Umgebung wird die Vernetzung des Präpolymerisates mit freien Isocyanatgruppen in Gang gebracht und sie läuft, je nach den klimatischen Bedingungen, rascher oder langsamer ab. Im allgemeinen ist zwei Stunden nach der Montage der Fahrzeugscheibe dieser zweite Klebstoff so weit ausgehärtet, dass sämtliche Befestigungshilfen vom Fahrzeug entfernt werden können.

Die Erreichung der vollständigen Festigkeitswerte ist ebenfalls von den klimatischen Bedingungen abhängig, und nach der vollständigen Aushärtung ist die entsprechende Verbindungsstelle nicht nur fest und gut klebend, sondern sie weist auch noch elastische Eigenschaften auf. Die endgültige Aushärtung unter Erreichung der vollen Festigkeitswerte des Klebstoffes ist im allgemeinen bei Temperaturen von 15 - 20° C und einer Luftfeuchtigkeit von 60 - 80 % nach etwa sieben Tagen erreicht.

### Vergleichsbeispiel

Es wurde wie im Beispiel 1 gearbeitet, jedoch war das Profil aus dem ersten Klebstoff nicht ein Profil mit einem Dreiecksquerschnitt, sondern ein Profil mit einem etwa trapezförmigen Querschnitt, wobei die längere Parallelseite des Trapezes mit dem Primer verklebt war. Die kürzere obere Parallelseite des Trapezes war ferner mit einer Einbuchtung versehen, sodass das Klebstoffprofil an seiner Oberseite eine Rille aufwies.

Nach dem vollständigen Aushärten des ersten Klebstoffes wurde in diese Rille des Profils der klebefähige zweite Klebstoff in Form eines Profils eingeklebt. Sofort nachher wurde auf diese Anordnung Druck ausgeübt, sodass das noch plastisch verformbare Profil des klebefähigen zweiten Klebstoffes fest in die Rille eingepresst wurde.

In diesem Vergleichsbeispiel bestand das Profil aus dem ersten Klebstoff aus einem identischen Klebstoff, wie demjenigen, der in dem erfindungsgemässen Beispiel eingesetzt wurde.

Des weiteren war auch das Profil aus dem zweiten, bei der Verklebung noch haftfähigen Klebstoff identisch mit dem Klebstoff des erfindungsgemässen Beispiels, d.h. dieser Aktivklebstoff bestand ebenfalls aus dem Produkt das im Handel unter der Bezeichnung Sikaflex-250 BD-1 erhältlich ist.

### Testung der nach dem erfindungsgemässen Beispiel und der nach dem Vergleichsbeispiel hergestellten Verklebungen.

Nach der Aufbringung der Profile aus dem zweiten noch haftfähigen Klebstoff auf die Glasplatte bzw. auf das Profil des ersten Klebstoffes wurde in beiden Fällen Druck angewandt und dann erfolgte die Lagerung der Glasplatten mit den aufgebrachten Profilen nach den folgenden Schemen:
1. 14 Tage bei 20° und 50 % relativer Luftfeuchte
2. Wie 1. mit zusätzlicher 7-tägiger Wasserlagerung
3. Wie 1. mit zusätzlicher 14-tägiger Lagerung bei 60°C und 100 % relativer Luftfeuchte (Cataplasmatest)
Nach diesen Lagerungen wurde die Haftung des Profils des Aktivklebers auf dem Glaskörper bzw. dem Profil des ausgehärteten Klebstoffes getestet, wobei die Klebestelle einer so starken Beanspruchung unterworfen wurde, dass in allen Fällen ein Bruch auftrat. In manchen Fällen trat der Bruch innerhalb des ursprünglich aufgebrachten Profils auf und dies wird als kohäsiver Bruch bezeichnet, der ein Kennzeichen für eine einwandfreie Haftung ist. In manchen Fällen verlief die Bruchlinie so, dass ein Teil des Bruches an der Berührungsstelle des Klebstoffes, auftrat, ein Teil jedoch in der Masse des Klebstoffes selbst. Dies wird mit teils kohäsiv, teils adhäsiv bezeichnet und zeigt eine kritische Haftung an.

Erfolgt der Bruch jedoch ausschliesslich an der Stelle, wo der Klebstoff verankert wurde, also entweder auf der Oberfläche der Glasplatte des Primers oder des Keramikrandes oder auf dem Profil des ersten Klebstoffes, dann zeigt dies eine nicht ausreichende Haftung an.

Die Qualität der Haftung wird mit drei (optimal) zwei (kritische Haftung) und eins (nicht ausreichende Haftung) benotet.

Bei dem erfindungsgemässen Beispiel wurde bei allen drei angeführten Lagerungsarten immer die Benotung drei erzielt.

Bei dem Beispiel zu Vergleichszwecken wurde jedoch in den meisten Fällen die Benotung 1 erhalten, in manchen Fällen die Benotung zwei erhalten, und zwar ebenfalls im wesentlichen unabhängig davon, welches Alterungsverfahren angewandt wurde.

Diese Tests zeigten jedoch, dass bereits nach einer 28-tägigen Alterung des Profils aus dem ersten Klebstoff nur noch in wenigen Fällen die Benotung 2 erreicht wurde, meist lag in diesem Fall auch die Benotung bei 1. In allen Fällen, in denen auf das Profil des ersten Klebstoffes erst nach 72 Tagen bzw. nach 120 Tagen das Profil des zweiten Klebstoffes aufgebracht wurde, konnte nurmehr eine Haftung der Benotung 1 erzielt werden.

In einem weiteren Vergleichsbeispiel wurde das Klebstoffprofil aus dem ersten Klebstoff ebenfalls aus dem Klebstoff Sikaflex-250 BD-1 hergestellt und nach einer 72-tägigen Alterung bzw. 120-tägigen Alterung oder auf dieses erste Klebstoffprofil ein zweites Klebstoffprofil ebenfalls aus dem Klebstoff Sikaflex-250 BD-1 aufgebracht. In diesem Fall war bei identischer Klebstoffzusammensetzung des ersten Profils aus dem gehärteten Klebstoff und des zweiten Profils aus dem bei der Verklebung noch nicht gehärteten Profil die Haftung des zweiten Klebstoffs nach dessen Aushärtung unbefriedigend, die Ergebnisse waren im wesentlichen gleich wie bei den ersten Tests, d.h. es konnte nur die Benotung 1 und 2, niemals jedoch die Benotung 3 erreicht werden.

## Patentansprüche

1. Glaskörper, insbesondere Glasscheibe, der zur Verklebung mit einem weiteren Material ausgestattet ist, wobei sich auf einer Oberfläche des äusseren Randbereiches des Glaskörpers eine für Ultraviolettlicht im wesentlichen undurchlässige Schicht und/oder eine Schicht aus einem Haftvermittler befindet und wobei im äusseren Randbereich des Glaskörpers in direktem Kontakt mit diesem und/oder in direktem Kontakt mit der allenfalls vorhandenen für Ultraviolettlicht undurchlässigen Schicht und/oder in direktem Kontakt mit der allenfalls anwesenden Schicht des Haftvermittlers sich mindestens ein Profil aus einem ersten Klebstoff befindet, wobei dieser erste Klebstoff zum Zeitpunkt der verklebung des Glaskörpers mit dem weiteren Material bereits verfestigt ist und dieses Profil als Abstandshalter dient und wobei ferner mindestens ein Profil eines zweiten Klebstoffs vorhanden ist, wobei dieser zweite Klebstoff zum Zeitpunkt der Verklebung klebende Eigenschaften aufweist, dadurch gekennzeichnet, dass das mindestens eine Profil des zweiten Klebstoffes sich im Randbereich des Glaskörpers, jedoch innerhalb des Profils aus dem verfestigten ersten Klebstoff befindet, und das mindestens eine Profil des zweiten Klebstoffes sich mit mindesten zwei der fogenden Oberflächenin direkt am Kontakt befindet: der Oberfläche des Glaskörpers, der Oberfläche der allenfalls vorhandenen, für Ultraviolettlicht undurchlässigen Schicht und/oder der Oberfläche der allenfalls vorhandenen Schicht eines Haftvermittlers.

2. Glaskörper gemäss Anspruch 1, dadurch gekennzeichnet, dass das mindestens eine Profil des zweiten Klebstoffs und vorzugsweise auch das mindestens eine Profil des ersten Klebstoffes, aus einem solchen Klebstoff besteht, der vor seiner Aushärtung oder vollständigen Aushärtung, beziehungsweise Vernetzung, standfest und pastös ist, und welcher nach seiner vollständigen Aushärtung und Vernetzung fest ist und vorzugsweise ausserdem flexibel und/oder elastisch ist.

3. Glaskörper gemäss Anspruch 1 oder 2, dadurch gekennzeichnet, dass das mindestens eine Profil des zweiten Klebstoffes und vorzugsweise auch das mindestens eine Profil des ersten Klebstoffs, aus einer Gruppe ausgewählt ist, welche die folgenden Kunststoffmaterialien umfasst:
- Elastomere, insbesondere Polyurethane, Silikone, Polysulfide, synthetische und natürliche Kautschuke,
- flexibilisierte Duromere, insbesondere Epoxide, Phenolharze, Polyurethane, und
- flexibilisierte Thermoplasten, insbesondere Acrylharze, Polyvinylchlorid, Polyamide, thermoplastische Kautschukkombinationen.

4. Glaskörper gemäss einem der Ansprüche 1 bis 3, dadurch gekennzeichnet, dass das mindestens eine Profil des zweiten Klebstoffes und vorzugsweise ausserdem das mindestens eine Profil des ersten Klebstoffes, aus einem Zweikomponenten-Klebstoff oder einem reaktiven Einkomponenten-Klebstoff aufgebaut ist, wobei bevorzugte Zweikomponenten-Klebstoffe solche auf Basis einer Komponente mit mindestens einer freien Isocyanatgruppe und einer Härterkomponente und bevorzugte Einkomponenten-Klebstoffe,ebenfalls solche auf Basis einer Komponente mit mindestens einer freien Isocyanatgruppe sind, wobei in diesen Einkomponenten-Klebstoffen die Härtung durch Reaktion der Komponente mit mindestens einer freien Isocyanatgruppe mit Wasser, beziehungsweise Feuchtigkeit der Umgebung und/oder bei Anwesenheit eines verkappten Härters in der Zusammensetzung durch Aktivierung dieses Härters mittels eines Erhitzungsschrittes und/oder durch Aktivierung dieses Härters mittels der Einwirkung von Wasser, beispielsweise Feuchtigkeit der Umgebung, durchführbar ist.

5. Glaskörper gemäss einem der Ansprüche 1 bis 4, dadurch gekennzeichnet, dass das mindestens eine Profil aus dem ersten Klebstoff oder ein Teilbereich des mindestens einen Profiles aus dem ersten Klebstoff, einen Querschnitt in Form eines Dreiecks aufweist, und dass das mindestens eine Profil des zweiten Klebstoffs bei seiner Auftragung ebenfalls einen Querschnitt in Form eines Dreiecks aufweist, und standfest und pastös ist, wobei bei der Einwirkung der äusseren Kräfte während des Verklebungsvorganges dieses zweite Profil permanent verformbar ist und nach dem vollständigen Aushärtung und Vernetzung eine feste Verbindung mit elastischen Eigenschaften gewährleistet.

6. Glaskörper gemäss einem der Ansprüche 1 bis 5, dadurch gekennzeichnet, dass sich innerhalb des ersten Profils aus dem ersten Klebstoff und innerhalb des Profils aus dem zweiten Klebstoff, im Randbereich des Glaskörpers, direkt auf der Oberfläche des Glaskörpers und/oder der Oberfläche einer allenfalls vorhandenen, für Ultraviolettlicht undurchlässigen Schicht, und/oder der Oberfläche einer allenfalls vorhandenen Schicht eines Haftvermittlers, ein zweites Profil aus dem ersten Klebstoff befindet.

7. Glaskörper gemäss einem der Ansprüche 1 bis 6, dadurch gekennzeichnet, dass das mindestens eine äussere Profil aus dem ersten Klebstoff als Dichtlippe ausgebildet ist.

8. Glaskörper gemäss einem der Ansprüche 1 bis 7, dadurch gekennzeichnet, dass der Glaskörper eine Fahrzeugscheibe, eine Fensterscheibe, eine Verbundglasscheibe oder eine mit Glas beschichtete Stahlplatte ist, wobei der Glaskörper allenfalls eine aus mehreren Schichten aufgebaute Scheibe, beispielsweise eine Schutzglasscheibe, ist.

9. Glaskörper gemäss einem der Ansprüche 1 bis 8, dadurch gekennzeichnet, dass sich in den oberen Bereichen auf dem mindestens einen Profil aus dem ersten Klebstoff, vorzugsweise in einer rillenförmigen Vertiefung, dieses Profils ein Haftklebstoff befindet, wobei gegebenenfalls dieser Haftklebstoff von einer entfernbaren Schutzschicht abgedeckt ist und diese Schicht aus dem Haftklebstoff allenfalls in Form eines doppelseitigen geschäumten oder ungeschäumten Klebebandes ausgebildet ist.

10. Glaskörper gemäss einem der Ansprüche 1 bis 9, dadurch gekennzeichnet, dass das mindestens eine Profil aus dem zweiten Klebstoff ein Präpolymerisat enthält oder daraus besteht, wobei das Präpolymerisat und/oder ein in diesem zweiten Klebstoff allenfalls vorhandener verkappter Härter, bei Einwirkung von Wasser, beispielsweise Feuchtigkeit der Umgebung, eine vollständige Aushärtung und Vernetzung dieses zweiten Klebstoffes unter Ausbildung eines festen und vorzugsweise ausserdem flexiblen und/oder elastischen Produktes, bewirkt und dass das mindestens eine Profil des zweiten Klebstoffes vor dem Zutritt von Feuchtigkeit durch eine Schutzschicht oder entsprechende Verpackung bis zu dem Zeitpunkt der Verklebung des Glaskörpers mit einem weiteren Material, geschützt ist.

11. Glaskörper gemäss einem der Ansprüche 1 bis 10, dadurch gekennzeichnet, dass sich auf der Oberfläche des äusseren Randbereiches des Glaskörpers eine für Ultraviolettlicht im wesentlichen undurchlässige Schicht befindet und dass sich das mindestens eine Profil aus dem ersten Klebstoff und allenfalls vorhandene weitere Profile aus dem ersten Klebstoff, in direktem Kontakt mit der für Ultraviolettlicht im wesentlichen undurchlässigen Schicht befinden, oder
dass sich zwischen der für Ultraviolettlicht im wesentlichen undurchlässigen Schicht und der Berührungsfläche des mindestens einen Profils aus dem ersten Klebstoff und/oder der Berührungsfläche allenfalls vorhandener weiterer Profile aus dem ersten Klebstoff oder in Teilbereichen dieser oder einer dieser Berührungsflächen, zwischen den Klebstoffprofilen und der für Ultraviolettlicht im wesentlichen undurchlässigen Schicht, eine Zwischenschicht aus einem Haftvermittler (Primer) befindet und
wobei gewährleistet ist, dass das mindestens eine Profil des zweiten Klebstoffs sich mit mindestens zwei der folgenden Oberflächen in direktem Kontakt befindet:
der Oberfläche des Glaskörpers, der Oberfläche der für Ultraviolettlicht undurchlässigen Schicht und/oder der Oberfläche der allenfalls vorhandenen Schicht des Haftvermittlers, und wobei bei Anwesenheit von zwei oder mehr Profilen des zweiten Klebstoffes, sich diese mit mindestens zwei unterschiedlichen der genannten Oberflächen in direktem Kontakt befinden.

12. Verfahren zur Herstellung des Glaskörpers, insbesondere einer Glasscheibe, gemäss Anspruch 1, der auf einer Oberfläche des äusseren Randbereiches des Glaskörpers eine für Ultraviolettlicht im wesentlichen undurchlässige Schicht und/oder eine Schicht aus einem Haftvermittler aufweist, dadurch gekennzeichnet dass man auf den äusseren Rand bereich des Glaskörpers, in direktem Kontakt mit diesem und/oder in direktem Kontakt mit der, für Ultraviolettlicht im wesentlichen undurchlässigen Schicht und/oder in direktem Kontakt mit Schicht eines Haftvermittlers, mindesten ein Profil eines ersten Klebstoffes aufträgt, wobei dieser erste Klebstoff bei der Aufbringung ungehärtet oder nicht vollständig gehärtet, beziehungsweise vernetzt ist, und pastöse Eigenschaften besitzt, jedoch standfest ist, und dass man dieses mindestens eine Profil aus dem ersten Klebstoff nach seiner Aufbringung aushärten und vernetzen lässt, wodurch es fest wird und vorzugsweise ausserdem eine Flexibilität und/oder Elastizität erlangt, und dass man innerhalb des mindestens einen Profiles aus dem ersten Klebstoff mindestens ein Profil eines zweiten Klebstoffes, so aufträgt, dass das Profil aus dem mindestens einen zweiten Klebstoff mit mindestens zwei der folgenden Oberflächen in direkten Kontakt kommt, nämlich der Oberfläche des Glaskörpers, der Oberfläche der allenfalls vorhandenen, für Ultraviolettlich undurchlässigen Schicht und/oder der Oberfläche der allenfalls vorhandenen Schicht eines Haftvermittlers, und wobei das Profil des zweiten Klebstoffes aus einem solchen Klebstoff besteht, der vor seiner Aushärtung oder vollständigen Aushärtung, beziehungsweise Vernetzung, standfest und pastös, jedoch bei Einwirkung äusserer Kräfte, permanent verformbar ist, und welcher nach seiner vollständigen Aushärtung und Vernetzung, fest ist und ausserdem vorzugsweise eine Flexibilität und/oder Elastizität aufweist und dass die vollständige Aushärtung des Profils aus dem mindestens einen zweiten Klebstoffes, erst bei der Verklebung des Glaskörpers mit einem weiteren Material und/oder unmittelbar vor der Verklebung des Glaskörpers mit einem weiteren Material in Gang gebracht wird.

13. Verfahren nach Anspruch 12, dadurch gekennzeichnet, dass man einen Glaskörper gemäss einem der Ansprüche 1 bis 11 herstellt.

14. Verwendung eines Glaskörpers, insbesondere einer Glasscheibe, gemäss Anspruch 1, zur Verklebung mit mindestens einem weiteren Material, wobei sich auf einer Oberfläche des äusseren Randbereiches des Glaskörpers eine für Ultraviolettlicht im wesentlich undurchlässige Schicht und/oder eine Schicht aus einem Haftvermittler befindet, und sich auf dem Glaskörper im äusseren Randbereich desselben mindestens ein Profil aus einem ersten, bereits verfestigten Klebstoff befindet und innerhalb desselben mindestens ein Profil eines zweiten Klebstoffes, der zum Zeitpunkt der Verklebung klebende Eigenschaften aufweist und sich mit mindestens zwei der folgenden Oberflächen in direktem Kontakt befindet:
der Oberfläche des Glaskörpers, der Oberfläche der allenfalls vorhandenen, für Ultraviolettlicht undurchlässigen Schicht und/oder der Oberfläche der allenfalls vorhandenen Schicht des Haftvermittlers, und wobei diese Verwendung dadurch gekennzeichnet ist, dass man das mindestens eine Profil des zweiten Klebstoffes mit dem weiteren Material unter Einwirkung von äusseren Kräften, in Kontakt bringt, wobei während dieses Verklebungsvorgangs das Profil des mindestens einen zweiten Klebstoffes permanent verformt wird und an dem weiteren Material haften bleibt, und dass nach der vollständigen Aushärtung und Vernetzung dieses zweiten Klebstoffes, eine feste Zwischenschicht ausgebildet wird, wobei diese Zwischenschicht vorzugsweise ausserdem eine Flexibilität und/oder Elastizität aufweist, und dass bei der Durchführung des Verklebbungsvorganges, das auf dem Glaskörper vorhandene, mindestens eine Profil aus dem ersten, bereits verfestigten Klebstoff, als Abstandshalter dient.

15. Verwendung nach Anspruch 14, dadurch gekennzeichnet, dass man einen Glaskörper verwendet, bei dem das mindestens eine Profil des zweiten Klebstoffes, in ungehärtetem oder nicht vollständig ausgehärtetem, beziehungsweise vernetztem Zustand vorliegt, und dass die vollständige Aushärtung, beziehungsweise Vernetzung des Klebstoffprofils, erst unmittelbar vor der Verklebung in Gang gebracht wird, und dass die vollständige Aushärtung, beziehungsweise Vernetzung des zweiten Klebstoffes, erst dann stattfindet, nachdem der Glaskörper mit dem zu verklebenden weiteren Material unter Druck in Berührung gebracht worden ist.

16. Verwendung nach Anspruch 14 oder 15, dadurch gekennzeichnet, dass das mindestens eine Profil aus dem ersten Klebstoff beim Hersteller des Glaskörpers auf den Glaskörper aufgebracht wird, und dass das mindestens eine Profil des zweiten Klebstoffes entweder
a) ebenfalls beim Hersteller des Glaskörpers aufgebracht wird, wobei Vorkehrungen getroffen werden, dass eine Aushärtung oder vollständige Aushärtung, beziehungsweise Vernetzung, des Profils aus dem zweiten Klebstoff, während der anschliessenden Lagerung des Glaskörpers, verhindert wird, beispielsweise durch eine feuchtigkeitsdichte Verpackung, oder
b) dass das mindestens eine zweite Profil des zweiten Klebstoffes erst unmittelbar vor der Verklebung mit dem weiteren Material auf die Oberfläche des äusseren Randbereiches des Glaskörpers und/oder eine gegebenenfalls vorhandene, im wesentlichen für Ultraviolettlicht undurchlässige Schicht und/oder eine gegebenenfalls vorhandene Schicht aus einem Haftvermittler, aufgebracht wird.

## Claims

1. Glass body, in particular glass sheet, which is equipped for sealing to a further material, a layer which is substantially opaque to ultraviolet light and/or a layer of an adhesion enhancer being present on the surface of the outer peripheral region of the glass body and a least one profile of a first adhesive being present in the outer peripheral region of the glass body in direct contact with it and/or in direct contact with the possibly present layer which is opaque to ultraviolet light and/or in direct contact with the possible present layer of adhesion enhancer, this first adhesive being already cured at the moment of sealing of the glass body to the further material and this profile serving as a spacer and furthermore at least one profile of a second adhesive being present, this second adhesive having adherent characteristics at the moment of sealing, characterised in that the at least one profile of the second adhesive is present in the peripheral region of the glass body but inside the profile of the cured first adhesive, and the at least one profile of the second adhesive is present in direct contact with at least two of the following surface, the surface of the glass body, the surface of the possibly present layer which is opaque to ultraviolet light and/or the surface of the possibly present layer of adhesion enhancer.

2. Glass body according to claim 1, characterised in the at least one profile of the second adhesive and preferably also the at least one profile of the first adhesive comprise an adhesive such that before curing or complete curing or cross-linking it is stable and pasty, and which after complete curing and cross-linking is stable and preferably furthermore flexible and/or elastic.

3. Glass body according to claim 1 or 2, characterised in the at least one profile of the second adhesive and preferably also the at least one profile of the first adhesive are selected from a group comprising the following synthetic resin materials:
- elastomers, in particular polyurethanes, silicones, polysulphides, synthetic and natural rubbers:
- flexibilised thermosetting resins, in particular epoxides, phenol resins, polyurethanes, and
- flexibilised thermoplastics, in particular acryl resins, polyvinyl chloride, polyamide, thermoplastic rubber combinations.

4. Glass body according to one of claims 1 to 3, characterised in the at least one profile of the second adhesive and preferably also the at least one profile of the first adhesive is made up of a two-component adhesive or a reactive one-component adhesive, Preferred two-component adhesives being those based on a component having at least one free isocyanate group and a hardening component and preferred one-component adhesives, likewise those based on a component having at least one free-isocyanate group, and in these one-component adhesives the curing being performed by the reaction of the component having at least one free isocyanate group with water, or with moisture in the surroundings and/or in the presence of a concealed curing agent in the composition by activation of this curing agent by means of a heating step and/or by activation of this curing agent by means of the action of water, for example moisture in the surroundings.

5. Glass body according to one of claims 1 to 4, characterised in the at least one profile of the first adhesive or a partial region of the at least one profile of the first adhesive has a cross-section in the form of a triangle, and that the at least one profile of the second adhesive on its application likewise has a cross-section in the form of a triangle and is stable and pasty, and on the action of the external forces during the sealing process this second profile is permanently deformed and after completion of curing and cross-linking achieves a firm bond having elastic characteristics.

6. Glass body according to one of claims 1 to 5, characterised in that within the first profile of the first adhesive and within the profile of the second adhesive, in the peripheral region of the glass body, directly on the surface of the glass body and/or the surface of a possibly present layer which is opaque to ultraviolet light and/or the surface of a possible present layer of an adhesion enhancer, a second profile of the first adhesive is present.

7. Glass body according to one of claims 1 to 6, characterised in that the at least one outer profile of the first adhesive is formed as a sealing lip.

8. Glass body according to one of claims 1 to 7, characterised in that the glass body is a vehicle windscreen, a window glass, a bonded glass sheet or a steel plate coated with glass, the glass body possible being a sheet made up of one or more layers, for example a safety glass sheet.

9. Glass body according to one of claims 1 to 8, characterised in that in the upper region on the at least one profile of the first adhesive, preferably in a channel-shaped recess in this profile, a sealing adhesive is present, this sealing adhesive if necessary being covered over by a removable protective layer and this layer of the sealing adhesive possibly being in the form of a double-sided foamed or unfoamed adhesive strip.

10. Glass body according to one of claims 1 to 9, characterised in that the at least one profile of the second adhesive contains or comprises a prepolymerisate, the prepolymerisate and/or a concealed curing agent possibly present in this second adhesive effecting under the action of water, for example moisture in the surroundings, a complete curing and cross-linking of this second adhesive with the formation of a stable and preferably also flexible and/or elastic product, and that the at least one profile of the second adhesive is protected from the access of moisture by a protective layer or by appropriate packing up to the moment of sealing of the glass body to a further material.

11. Glass body according to one of claims 1 to 10, characterised in that a layer which is substantially opaque to ultraviolet light is present on the surface of the outer peripheral region of the glass body and that the at least one profile of the first adhesive and the possibly present further profile of the first adhesive are present in direct contact with the layer which is substantially opaque to ultraviolet light, or
that between the layer which is substantially opaque to ultraviolet light and the contact surface of the at least one profile of the first adhesive and/or the contact surface of possibly present further profiles of the first adhesive or in part-regions of the latter or one of these contact surface, between the adhesive profiles and the layer which is substantially opaque to ultraviolet light there is present an intermediate layer of an adhesion enhancer (primer) and
the result is achieved that the at least one profile of the second adhesive is present in direct contact with at least two of the following surface:
the surface of the glass body, the surface of the layer which is opaque to ultraviolet light and/or the surface of the possibly present layer of adhesion enhancer, and in the presence of two or more profiles of the second adhesive the latter are present in direct contact with at least two different ones of the surfaces mentioned.

12. Process for the manufacture of the glass body, in particular a glass sheet, according to claim 1, which has on a surface of the outer peripheral region of the glass body a layer which is substantially opaque to ultraviolet light and/or a layer of an adhesion enhancer, characterised in that there is applied to the outer edge region of the glass body, in direct contact with it and/or in direct contact with the layer which is substantially opaque to ultraviolet light and/or in direct contact with the layer of an adhesion enhancer, at least one profile of a first adhesive, this first adhesive being uncured or incompletely cured or cross-linked on application and having pasty characteristics, but being stable, and this at least one profile of the first adhesive is allowed to cure and cross-link after application, whereby it is stable and preferably also achieves flexibility and/or elasticity and that within the at least one profile of the first adhesive there is applied at least one profile of a second adhesive so that the profile of the at least one second adhesive comes into direct contact with at least two of the following surfaces, namely the surface of the glass body, the surface of the possible present layer which is opaque to ultraviolet light and/or the surface of the possibly present layer of an adhesion enhancer, and the profile of the second adhesive comprising such an adhesive that is stable and pasty before its curing or complete curing or cross-linking, and which after its complete curing and cross-linking is stable and furthermore preferably has flexibility and/or elasticity and that the complete curing of the profile of the at least one second adhesive is brought into operation only on the sealing of the glass body to a further material and/or directly before the sealing of the glass body to a further material.

13. Process according to claim 12, characterised in that there is produced a glass body according to one of claims 1 to 11.

14. The use of a glass body, in particular a glass sheet, according to claim 1, for sealing to at least one further material, a layer which is substantially opaque to ultraviolet light and/or a layer of an adhesion enhancer being present on a surface of the outer peripheral region of the glass body, and at least one profile of a first, already cured, adhesive being present on the glass body in its outer peripheral region and within this profile there being present at least one profile of a second adhesive which at the moment of sealing has adhesive characteristics and is in direct contact with at least two of the following surfaces:
the surface of the glass body, the surface of the possibly present layer which is opaque to ultraviolet light and/or the surface of the possibly present layer of adhesion enhancer, and this use being characterised in that the at least one profile of the second adhesive is brought into contact with the further material under the action of external forces, the profile of the at least one second adhesive being permanently deformed during this sealing process and then remaining adhering to the further material, and that after the complete curing and cross-linking of this second adhesive a stable intermediate layer is formed, this intermediate layer preferably also having flexibility and/or elasticity, and that on the performance of the sealing step the at least one profile of the first, already cured, adhesive which is present on the glass body serves as a spacer.

15. Use according to claim 14, characterised in that there is employed a glass body in which the at least one profile of the second adhesive is present in an uncured or incompletely cured or cross-linked state and that the full curing or cross-linking of the adhesive profile is brought into operation only directly before the sealing step, and that the complete curing or cross-linking of the second adhesive only takes place after the glass body has been brought into contact under pressure with the further material to which it is to be sealed.

16. Use according to claim 14 or 15, characterised in the at least one profile of the first adhesive is applied to the glass body at the manufacturer of the glass body and that the at least one profile of the second adhesive is either
a) likewise applied at the manufacturer of the glass body, steps being undertaken to prevent curing or complete curing or cross-linking of the profile of the second adhesive during the subsequent storage of the glass body, for example by the use of a moisture-tight packaging, or
b) that the at least one second profile of the second adhesive is only applied directly before the sealing to the further material, to the surface of the outer peripheral region of the glass body and/or a possibly present layer which is substantially opaque to ultraviolet light and/or a possibly present layer of an adhesion enhancer.

## Revendications

1. Corps de verre, en particulier une vitre, qui est équipé en vue du collage sur un autre matériau, une couche essentiellement opaque à la lumière ultraviolette ou une couche d'un intermédiaire d'adhérence étant située sur une surface de la bordure extérieure du corps de verre, au moins un profilé en une première colle se trouvant, dans la bordure extérieure du corps de verre, en contact direct avec celui-ci et/ou en contact direct avec la couche opaque à la lumière ultraviolette, présente dans tous les cas, et/ou en contact direct avec la couche d'intermédiaire d'adhérence, présente dans tous les cas, cette première colle étant déjà durcie au moment du collage du corps de verre sur l'autre matériau, et ce profilé servant d'élément d'écartement, au moins un profilé en une seconde colle étant en outre présent, cette seconde colle présentant des propriétés adhésives au moment du collage, caractérisé en ce que le profilé en la seconde colle qui est au moins présent se trouve dans la bordure du corps de verre, mais à l'intérieur du profilé en la première colle durcie, et en ce que le profilé en la seconde colle qui est au moins présent se trouve en contact direct avec au moins deux des surfaces suivantes :
la surface du corps de verre, la surface de la couche opaque à la lumière ultraviolette, présente dans tous les cas, et/ou la surface de la couche de l'intermédiaire d'adhérence, présente dans tous les cas.

2. Corps de verre selon la revendication 1, caractérisé en ce que le profilé en la seconde colle qui est au moins présent est constitué d'une colle qui est ferme et pâteuse avant son durcissement ou son durcissement complet ou sa réticulation complète, et qui est solide après son durcissement complet, respectivement sa réticulation, et de préférence est, en outre, souple et/ou élastique.

3. Corps de verre selon la revendication 1 ou 2, caractérisé en ce que le profilé en la seconde colle qui est au moins présent, et de préférence également le profilé en la première colle qui est au moins présent, sont choisis dans un groupe qui comprend les matières plastiques suivantes :
- les élastomères, en particulier le polyuréthane, la silicone, le polysulfure, les caoutchoucs synthétiques et naturels,
- les duromères rendus souples, en particulier les résines époxy, les résines phénoliques, les polyuréthanes, et
- les thermoplastiques rendus souples, en particulier les résines acryliques, le poly(chlorure de vinyle), le polyamide, les combinaisons de caoutchoucs thermoplastiques.

4. Corps de verre selon l'une des revendications 1 à 3, caractérisé en ce que le profilé en la seconde colle qui est au moins présent, et de préférence en outre le profilé en la première colle qui est au moins présent, sont constitués d'une colle à deux composants ou d'une colle réactive à un composant, les colles à deux composants préférées étant celles à base d'un composant comportant au moins un radical isocyanate libre et un composant durcissant, et les colles à un composant préférées étant également à base d'un composant comportant au moins un radical isocyanate libre, le durcissement de ces colles à un composant pouvant être réalisé par réaction du composant comportant au moins un radical isocyanate libre avec de l'eau ou l'humidité de l'environnement et/ou en présence d'un durcisseur masqué dans la composition, par activation de ce durcisseur au moyen d'une étape de chauffage et/ou par activation de ce durcisseur au moyen de l'action de l'eau, par exemple de l'humidité de l'environnement.

5. Corps de verre selon l'une des revendications 1 à 4, caractérisé en ce que le profilé en la première colle qui est au moins présent, ou une zone partielle du profilé en la première colle qui est au moins présent, présente une section transversale en forme de triangle, et en ce que le profilé en la seconde colle qui est au moins présent possède également une section transversale en forme de triangle lors de son application, et ce second profilé est ferme et pâteux, ce second profilé pouvant être déformé de manière permanente pendant l'opération de collage, par l'effet des forces extérieures, et assurant après le durcissement complet et la réticulation complète une liaison solide avec des propriétés élastiques.

6. Corps de verre selon l'une des revendications 1 à 5, caractérisé en ce que, à l'intérieur du premier profilé en la première colle et à l'intérieur du profilé en la seconde colle, dans la bordure du corps de verre, directement sur la surface du corps de verre et/ou sur la surface d'une couche opaque à la lumière ultraviolette, présente dans tous les cas, et/ou sur la surface d'une couche d'un intermédiaire d'adhérence, présente dans tous les cas, se trouve un second profilé en la première colle.

7. Corps de verre selon l'une des revendications 1 à 6, caractérisé en ce que le profilé extérieur en la première colle qui est au moins présent est configuré en forme de lèvre d'étanchéité.

8. Corps de verre selon l'une des revendications 1 à 7, caractérisé en ce que le corps de verre est une vitre de véhicule, une vitre de fenêtre, une vitre en verre composite ou une plaque d'acier revêtue de verre, le corps de verre étant dans tous les cas une vitre constituée de plusieurs couches, par exemple un vitrage protecteur.

9. Corps de verre selon l'une des revendications 1 à 8, caractérisé en ce que dans les zones supérieures du profilé en la première colle qui est au moins présent, de préférence dans un creux en forme de rigole de ce profilé, se trouve une colle d'adhérence, cette colle d'adhérence étant éventuellement recouverte par une couche protectrice détachable, cette couche de colle d'adhérence étant dans tous les cas configurée sous la forme d'une bande adhésive recouverte de mousse sur ses deux faces, ou non couverte de mousse.

10. Corps de verre selon l'une des revendications 1 à 9, caractérisé en ce que le profilé en la seconde colle qui est au moins présent contient un prépolymère ou en est constitué, le prépolymère et/ou un durcisseur masqué présent dans tous les cas dans cette seconde colle ayant, lors de la pénétration d'eau, par exemple l'humidité de l'environnement, pour effet un durcissement complet et une réticulation de cette seconde colle, en formant un produit solide et de préférence en outre souple et/ou élastique, et en ce que le profilé en la seconde colle qui est au moins présent est protégé de la pénétration d'humidité par une couche protectrice ou un emballage approprié, jusqu'au moment du collage du corps de verre sur un autre matériau.

11. Corps de verre selon l'une des revendications 1 à 10, caractérisé en ce qu'une couche essentiellement opaque à la lumière ultraviolette se trouve sur la surface de la bordure du corps de verre selon l'invention, et en ce que le profilé en la première colle qui y est au moins présent se trouve en contact direct avec la couche essentiellement opaque à la lumière ultraviolette, ou
en ce qu'entre la couche essentiellement opaque à la lumière ultraviolette et la surface de contact du profité en la première colle qui est au moins présent et/ou la surface de contact des autres profilés en la première colle présents dans tous les cas, ou dans des parties de ceux-ci ou d'une de ces surfaces de contact, une couche intermédiaire en un intermédiaire d'adhérence (primaire) est située entre les profilés de colle et la couche essentiellement opaque à la lumière ultraviolette, et
le profité en la seconde colle qui est au moins présent étant assuré de se trouver en contact direct avec au moins deux des surfaces suivantes :
la surface du corps de verre, la surface supérieure de la couche opaque à la lumière ultraviolette et/ou la surface de la couche en l'intermédiaire d'adhérence, présentes dans tous les cas, tandis qu'en cas de présence de deux ou de plusieurs profilés en la seconde colle, ceux-ci se trouvent en contact direct avec au moins deux surfaces différentes parmi celles mentionnées.

12. Procédé de fabrication du corps de verre, en particulier d'un vitrage, selon la revendication 1, qui présente sur une surface de la bordure extérieure du corps de verre une couche essentiellement opaque à la lumière ultraviolette et/ou une couche d'un intermédiaire d'adhérence, caractérisé en ce que, sur la bordure extérieure du corps de verre, en contact direct avec celui-ci et/ou en contact direct avec une couche essentiellement opaque à la lumière ultraviolette, présente dans tous les cas, et/ou en contact direct avec une couche d'un intermédiaire d'adhérence, présente dans tous les cas, on applique au moins un profité en une première colle, cette première cotte étant lors de son application non durcie ou non complètement durcie ou réticulée et possédant des propriétés pâteuses tout en étant ferme, et en ce qu'après son application, on laisse durcir et réticuler ce profité en la première colle qui est au moins présent, grâce à quoi il devient solide et acquiert de préférence en outre une souplesse et/ou une élasticité, et en ce qu'à l'intérieur du profité en la seconde colle qui est au moins présent, on applique au moins un profité en une seconde colle, de telle sorte que te profité en au moins une seconde colle vienne en contact direct avec au moins deux des surfaces suivantes, à savoir la surface du corps de verre, la surface de la couche opaque à la lumière ultraviolette, présente dans tous les cas, et/ou la surface de la couche d'un intermédiaire d'adhérence, présente dans tous les cas, le profité en la seconde colle étant constitué d'une colle qui soit ferme et pâteuse avant son durcissement ou son durcissement complet, respectivement sa réticulation, mais qui soit déformable de manière permanente par l'action de forces extérieures, et qui est solide et en outre présente, de préférence, une souplesse et/ou une élasticité après son durcissement complet et sa réticulation complète, et en ce que le durcissement complet du profité en au moins une seconde colle n'est entamé qu'après le collage du corps de verre sur un autre matériau et/ou immédiatement avant le collage du corps de verre sur un autre matériau.

13. Procédé selon la revendication 12, caractérisé en ce que l'on fabrique un corps de verre selon l'une des revendications 1 à 11.

14. Utilisation d'un corps de verre, en particulier un vitrage, selon la revendication 1, en vue du collage sur au moins un autre matériau, une couche essentiellement opaque à la lumière ultraviolette et/ou une couche d'un intermédiaire d'adhérence se trouvant sur une surface de la bordure extérieure du corps de verre, et au moins un profilé en une première colle déjà solidifiée étant présent sur le corps de verre, dans la bordure extérieure de celui-ci, et au moins un profilé en une seconde colle étant présent à l'intérieur de ce profilé, ce profité en une seconde colle présentant au moment du collage des propriétés adhésives et se trouvant en contact direct avec au moins deux des surfaces suivantes :
la surface du corps de verre, la surface de la couche opaque à la lumière ultraviolette, présente dans tous les cas, et/ou ta surface de ta couche d'intermédiaire d'adhérence, présente dans tous les cas, cette utilisation étant caractérisée en ce que l'on amène le profité en la seconde colle qui est au moins présent en contact avec l'autre matériau sous l'action de forces extérieures, le profité en la seconde colle qui est au moins présent étant déformé de manière permanente pendant cette opération de collage et restant adhérer sur l'autre matériau, une couche intermédiaire solide étant alors formée après le durcissement complet et la réticulation complète de cette seconde colle, cette couche intermédiaire présentant de préférence de plus une souplesse et/ou une élasticité, et en ce que lors de l'exécution de l'opération de collage, le profilé en la première colle déjà durcie qui est au moins présent, situé sur le corps de verre, sert d'élément d'écartement.

15. Utilisation selon la revendication 14, caractérisée en ce que l'on utilise un corps de verre pour lequel le profilé en la seconde cotte qui est au moins présent se présente à l'état non durci ou non complètement durci ou réticulé, et en ce que le durcissement complet, respectivement la réticulation, du profité de colle n'est amorcé qu'immédiatement avant le collage, et en ce que le durcissement complet, respectivement la réticulation de la seconde colle, n'a lieu qu'après que le corps de verre a été mis en contact sous pression avec l'autre matériau à coller.

16. Utilisation selon la revendication 14 ou 15, caractérisée en ce que le profité en la première colle qui est au moins présent est appliqué sur te corps de verre par le fabricant du corps de verre, et en ce que le profité en la seconde colle qui est au moins présent est soit :
a) appliqué également chez le fabricant du corps de verre, des précautions étant prises pour empêcher un durcissement ou un durcissement complet, respectivement une réticulation, du profité en la seconde colle pendant l'entreposage ultérieur du corps de verre, par exemple un emballage étanche à l'humidité, soit
b) en ce que le second profilé en la seconde colle qui est au moins présent n'est appliqué qu'immédiatement avant le cottage sur l'autre matériau, sur la surface de la bordure extérieure du corps de verre et/ou sur une couche essentiellement opaque à la lumière ultraviolette éventuellement présente et/ou sur une couche d'un intermédiaire d'adhérence éventuellement présente.
